Europäisches Patentamt

European Patent Office

Office européen des brevets

(19)

(11) Veröffentlichungsnummer: **0 205 618 B1**

(12) **EUROPÄISCHE PATENTSCHRIFT**
**veröffentlicht nach Art. 158 Abs. 3**
**EPÜ**

(45) Veröffentlichungstag der Patentschrift: **10.07.91**

(51) Int. Cl.5: **G11B 33/04**

(21) Anmeldenummer: **86901725.1**

(22) Anmeldetag: **14.12.85**

(86) Internationale Anmeldenummer:
**PCT/EP85/00705**

(87) Internationale Veröffentlichungsnummer:
**WO 86/03877 (03.07.86 86/14)**

(54) BEHÄLTER FÜR COMPACTDISCS.

(30) Priorität: **18.12.84 DE 8436938 U**
**02.02.85 DE 8502897 U**

(43) Veröffentlichungstag der Anmeldung:
**30.12.86 Patentblatt 86/52**

(45) Bekanntmachung des Hinweises auf die
Patenterteilung:
**10.07.91 Patentblatt 91/28**

(84) Benannte Vertragsstaaten:
**AT BE CH DE FR GB IT LI NL SE**

(56) Entgegenhaltungen:
**EP-A- 0 086 275        EP-A- 0 092 666**
**EP-A- 0 134 278        EP-A- 0 139 161**
**EP-A- 0 163 221        DE-A- 2 609 881**
**DE-A- 2 615 457        FR-A- 781 416**
**US-A- 4 399 913**

**Patent Abstracts of Japan, Band 7, Nr. 228,**
**(P228)(1373) 8. Oktober 1983**

(73) Patentinhaber: **idn inventions and develop-**
**ment of novelties ag**
**Hartbertstrasse 9**
**CH-7002 Chur(CH)**

(72) Erfinder: **ACKERET, Peter**
**Allmendstrasse 18**
**CH-8700 Küsnacht(CH)**

(74) Vertreter: **Sparing Röhl Henseler Patentan-**
**wälte European Patent Attorneys**
**Rethelstrasse 123**
**W-4000 Düsseldorf 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft einen Behälter für Compactdiscs oder andere flache Aufzeichnungsträger.

Aus der EP-A-86 275 ist ein derartiger Behälter bekannt, der ein Gehäuse aufweist, in dem Disc-Halter für die Discs translatorisch gleitverschieblich geführt sind, wobei eine Auswerffederanordnung zum Vorspannen der Disc-Halter in eine teilweise ausgeschobene Entnahmeposition und eine manuell auslösbare Verriegelungsanordnung zum Arretieren der Disc-Halter im Gehäuse gegen die Vorspannung der Auswerffederanordnung in ihrer eingeschobenen Position vorgesehen ist. Jeder Disc-Halter besitzt eine Frontwandbaugruppe, die um eine quer zur Ausschubrichtung der Disc-Halter verlaufende Achse gegenüber dem Hauptteil des Disc-Halters wegschwenkbar ist, so daß die Disc an ihren einander abgewandten Hauptflächen zangenartig erfaßbar ist, wenn der Disc-Halter ausgeschoben ist. Hierbei sind immer mehrere Discs gemeinsam in einem Disc-Halter angeordnet, unter denen der Benutzer die gewünschte heraussuchen muß. Dies ist aber insbesondere in einem Kraftfahrzeug während des Fahrens schwierig und unerwünscht, da hierzu Aufmerksamkeit erfordernde Manipulation erforderlich ist. Ebenso wird der Fahrer abgelenkt, wenn er eine entnommene Disc wieder in den Behälter einordnen will.

Zum Stand der Technik gemäß Art. 54(3) gehört EP-A-163 221. Sie offenbart eine Vorrichtung zum Aufbewahren von Aufzeichnungsträgern mit einem Gehäuse, in dem gleitbeweglich zwischen einer eingeschobenen und einer teilweise ausgeschobenen Position Schieber für je einen Aufzeichnungsträger angeordnet sind. Die Frontwandung jedes Schiebers ist durch eine Vorspannfeder in eine abgeklappte Position vorgespannt. Beim Schiebereinschub von Hand muß diese Federvorspannung überwunden werden und dabei der Schieber translatorisch bewegt werden, was Aufmerksamkeit und Fingerfertigkeit verlangt.

Aufgabe der Erfindung ist es, einen Behälter der eingangs genannten Art zu schaffen, dessen Bedienung nur ein Minimum an Aufmerksamkeit und Handfertigkeit verlangt.

Die erfindungsgemäß vorgesehene Lösung dieser Aufgabe ist in den unabhängigen Patentansprüchen 1, 7 und 11 definiert; die Unteransprüche beziehen sich auf bevorzugte Ausgestaltungen dieser Konzeption.

Die Erfindung wird nachstehend anhand der in den beigefügten Abbildungen dargestellten Ausführungsbeispiele näher erläutert.

Fig. 1 zeigt perspektivisch und an der Oberseite aufgebrochen einen Behälter für Compactdiscs.

Fig. 2 zeigt eine Teilfrontansicht, teilweise geschnitten, des Behälters von Fig. 1.

Fig. 3 zeigt schematisch die Wirkungsweise einer Anzeigeeinrichtung.

Fig. 4 und 5 zeigen analog zu Fig. 2 zwei alternative Ausgestaltungen.

Fig. 6 zeigt eine schematische Vertikalschnittdarstellung zweier übereinanderliegender Disc-Halter.

Fig. 7 und 8 zeigen in Frontansicht und in Draufsicht eine Auswerffederanordnung.

Fig. 9 zeigt einen Teilvertikalschnitt durch einen einzelnen Disc-Halter in einer bevorzugten, von Fig. 1 abweichenden Form.

Fig. 10 zeigt einen Teilschnitt gemäß der Linie 10-10 in Fig. 9.

Fig. 11 zeigt einen Teilschnitt gemäß der Linie 11-11 in Fig. 9.

Fig. 12 zeigt einen Horizontalteilschnitt der Ausführungsform von Fig. 9.

Fig. 13 zeigt einen Teilschnitt gemäß Linie 13-13 von Fig. 12.

Fig. 14 und 15 zeigen in Teildraufsicht, teilweise geschnitten, zwei weitere Verriegelungsanordnungen.

Fig. 16 zeigt einen Schnitt gemäß Linie 16-16 in Fig. 15.

Fig. 17 zeigt eine weitere Verriegelungsanordnung analog zu Fig. 14.

Fig. 18 zeigt einen Vertikalschnitt zu Fig. 17.

Fig. 19 zeigt einen Vertikalschnitt senkrecht zu Fig. 18.

Fig. 20 zeigt schematisch eine Teilfrontänsicht einer weiteren Ausführungsform eines Behälters.

Fig. 21 zeigt einen Teilschnitt gemäß Linie 21-21 von Fig. 20.

Fig. 22 zeigt einen Schnitt parallel zu einer Disc eines weiteren Ausführungsbeispiels eines Behälters.

Fig. 23 zeigt einen Teilschnitt gemäß Linie 23-23 von Fig. 22.

Fig. 24 zeigt eine Ansicht auf die hintere Kante eines Disc-Halters von Fig. 22.

Fig. 25 zeigt einen Teilschnitt analog zu Fig. 23 im Bereich einer Taste zum Auslösen eines Disc-Halters.

Fig. 26 zeigt vergrößert ein Detail von Fig. 23.

Fig. 27 zeigt in Teilseitenansicht die Ausbildung einer Frontwandbaugruppe.

Fig. 28 zeigt weitgehend schematisch im Vertikalschnitt eine weitere Ausführungsform eines Behälters.

Fig. 29 zeigt im Teilhorizontalschnitt eine weitere Ausführungsform eines Behälters.

Fig. 30 und 31 stellen im Schnitt durch den Randbereich des Disc-Halters von Fig. 29 zwei Funktionspositionen dar.

Fig. 32 zeigt auseinandergezogen perspektivisch eine alternative Anlenkung der Frontwandbaugruppe an den Hauptteil des Disc-Halters.

Fig. 33 zeigt eine Ansicht auf die innere Rückwand eines Behälters einer Ausführungsform.

Fig. 34 zeigt perspektivisch einen Behälter der Ausführungsform von Fig. 33.

Fig. 35 und 36 zeigen zwei Ausführungsformen bezüglich der Anordnung und Montage von Auswerffedern.

Fig. 37 zeigt eine Draufsicht auf eine Ausführungsform eines Disc-Halters mit zugehörigem Gehäuse.

Fig. 38 zeigt einen Schnitt längs der Linie 38-38 von Fig. 37.

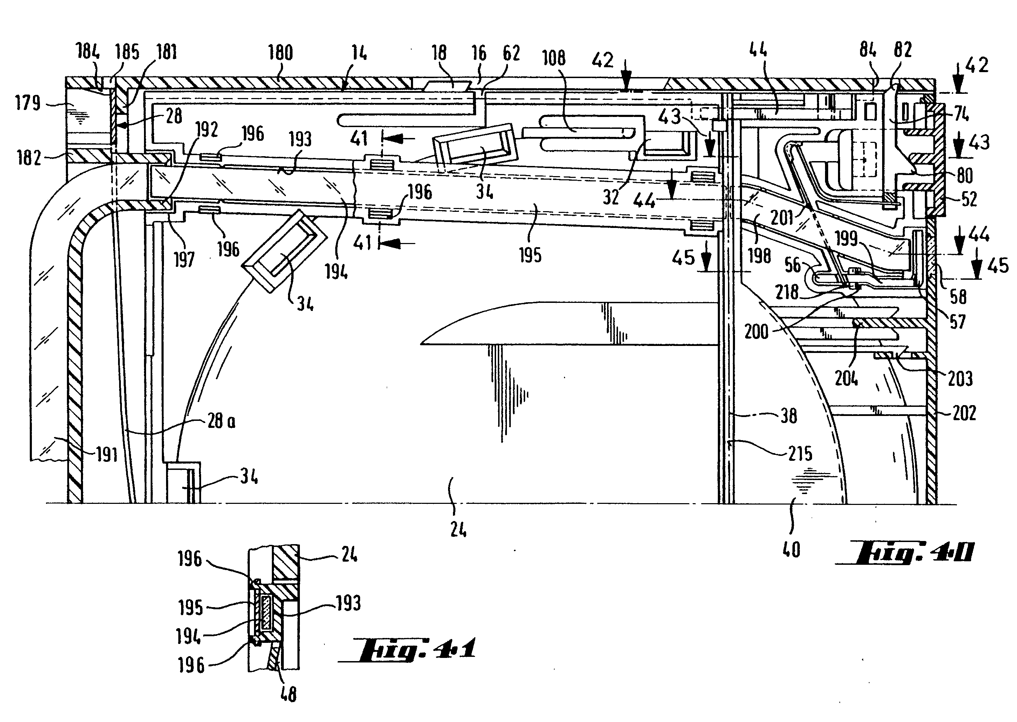

Fig. 39 zeigt einen Schnitt längs der Linie 39-39 von Fig. 37.

Fig. 40 zeigt hälftig eine Ansicht der Ausführungsform von Fig. 37 von unten.

Fig. 41 zeigt einen Schnitt längs der Linie 41-41 von Fig. 40.

Fig. 42 zeigt eine Ansicht in Richtung der Pfeile 42 von Fig. 40.

Fig. 43 zeigt einen Schnitt längs der Linie 43-43 von Fig. 40.

Fig. 44 zeigt einen Schnitt längs der Linie 44-44 von Fig. 40.

Fig. 45 zeigt einen Schnitt längs der Linie 45-45 von Fig. 40.

Fig. 46 zeigt eine Ausführungsform einer in zwei Stellungen gegenüber dem Hauptteil eines Disc-Halters verschwenkbaren Frontwandbaugruppe.

Fig. 47 zeigt einen Schnitt längs der Linie 47-47 von Fig. 46.

Fig. 48 zeigt im Schnitt eine Federanordnung im Bereich zwischen einem Hauptteil und einer Frontwandbaugruppe eines Disc-Halters.

Fig. 49 zeigt eine Verriegelungseinrichtung zwischen einem Hauptteil und einer Frontwandbaugruppe (abgeklappt) eines Disc-Halters im Schnitt.

Fig. 50 zeigt die Ausführungsform von Fig. 49 mit dem Hauptteil und der Frontwandbaugruppe fluchtend.

Fig. 51 zeigt einen Schnitt entlang eines das Hauptteil und die Frontwandbaugruppe verbindenden Filmgelenks.

Fig. 52 zeigt die Verriegelungseinrichtung von Fig. 49 in Draufsicht.

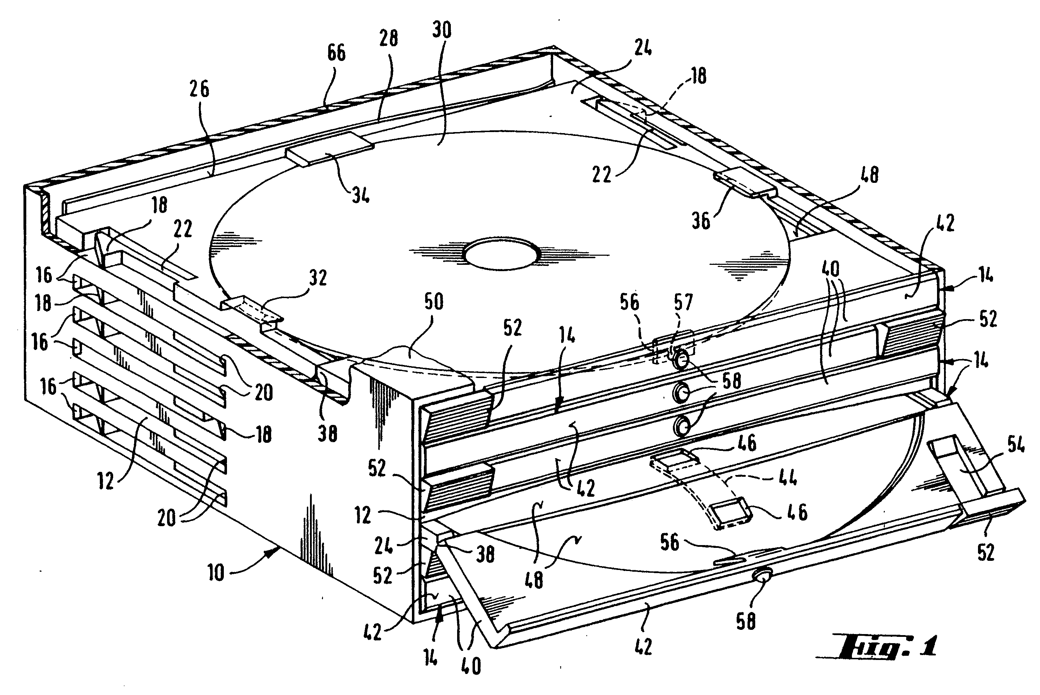

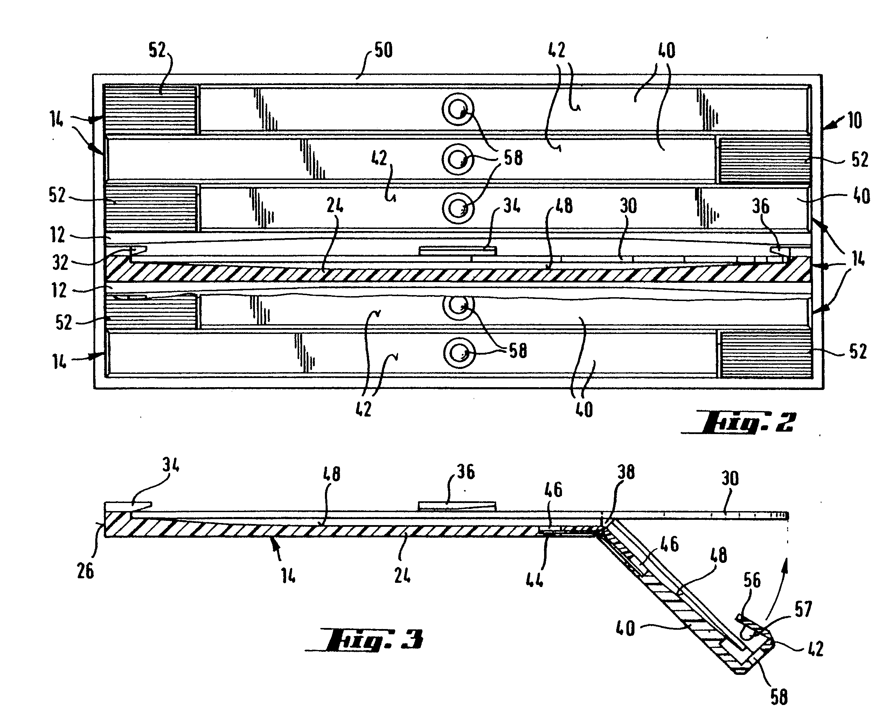

Der in Fig. 1 und 2 dargestellte Behälter umfaßt ein im wesentlichen quaderförmiges Gehäuse 10, das durch Zwischenböden 12 in einzelne frontseitig offene Aufnahmefächer für je einen teilweise aus dem Gehäuse 10 ausschiebbaren Disc-Halter 14 unterteilt ist. in Höhe jedes Aufnahmefachs weisen die Seitenwandungen des Gehäuses 10 Schlitze 16 auf, die sich in Richtung der Ausschubbewegung der Disc-Halter 14 erstrecken und in die Anschlaghaken 18 an den Disc-Haltern 14 greifen, welche den Ausschubweg durch Auflaufen auf jeweils eine Anschlagkante 20 der Schlitze 16 begrenzen. Die Anschlaghaken 18 sind über einstückig damit ausgebildete Federzungen 22 jeweils mit einem plattenförmigen Hauptteil 24 des jeweiligen Disc-Halters 14 verbunden, so daß sie beim erstmaligen Einschieben des Disc-Halters 14 in sein Aufnahmefach nach innen ausfedern können.

Jeder Disc-Halter 14 besitzt eine der offenen Front des jeweiligen Aufnahmefachs abgekehrte rückwärtige Kante 26, auf die eine blattförmige Auswerffeder 28 einwirkt, die den Disc-Halter 14 in Entnahmeposition vorspannt, vgl. den dritten Disc-Halter 14 von unten in Fig. 1. An den Hauptteil 24 des Disc-Halters 14, der die lichte Breite des Aufnahmefachs überspannt, sind auf der zur Aufnahme einer Disc 30 bestimmten Oberseite drei Niederhalter 32, 34, 36 angeformt, deren der offenen Front des jeweiligen Aufnahmefachs zugekehrte Kante abgeschrägt ist und die den Außenumfang einer eingelegten Disc 30 übergreifen. Ferner ist an den Hauptteil 24 des Disc-Halters 14 über ein sogenanntes Filmgelenk 38 eine Frontwandbaugruppe 40 angeformt, die eine Frontwand 42 umfaßt. Das Filmgelenk 38 ermöglicht eine relative Schwenkbewegung der Frontwandbaugruppe 40 um einen vorbestimmten Winkel, der einerseits durch das Aneinanderstoßen der einander gegenüberliegenden Kanten des Hauptteils 24 und der Frontwandbaugruppe 40 und andererseits durch das Anstoßen einer Blattfeder 44 an Enden von Aufnahmeschlitzen 46 hierfür im Hauptteil 24 bzw. in der Frontwandbaugruppe 40 begrenzt wird. In einer Endlage der Frontwandbaugruppe 40 - der oberen gemäß Fig. 1 - bildet die Frontwandbaugruppe 40 eine Verlängerung des Hauptteils 24 in dessen Ebene in dem Sinn, daß in dieser Position der gesamte Disc-Halter 14 in das Gehäuse 10 einschiebbar ist. In der anderen Endlage - nur in dieser ist der Anschlag der Blattfeder 44 wirksam, welche die Frontwandbaugruppe 40 in die abgeklappte Position vorspannt - ist die Frontwand 42 soweit abgeklappt, daß eine Disc 30 ohne Behinderung in den Aufnahmeteil des Disc-Halters 14 einlegbar ist, wobei der Hauptteil 24 soweit aus dem Aufnahmefach ausgeschoben ist, daß sein über die Frontseite des Gehäuses 10 vorstehender Abschnitt eine Leitfläche für das Einlegen der Disc 30 bildet.

Der Aufnahmeteil des Disc-Halters 14 wird durch eine wannenförmige Eintiefung 48 definiert, die sich auch in den anschließenden Bereich der Frontwandbaugruppe 40 hinein fortsetzt. Die Gesamtkontur der Eintiefung 48 bildet etwa die Form eines Hohlkugelsegments. Spiegelbildlich zu dem Teil des Segments, der sich im Hauptteil 24 befindet, ist eine ähnliche Eintiefung in der Unterseite jedes Zwischenbodens 12 sowie an der Innenseite der Gehäusedeckwand 50 vorgesehen. Aufgrund dieser Gestaltung kann die Disc 30 beim Einlegen niemals mit ihrem Aufzeichnungsbereich in Kontakt mit irgendwelchen Flächen oder Kanten gelangen, die diesen Bereich zerkratzen könnten, und zwar auch dann nicht, wenn der Benutzer in seiner Aufmerksamkeit abgelenkt ist, wie etwa beim Autofahren. Die Frontwände 42 aller Disc-Halter 14 decken in eingeschobenem Zustand der Disc-Halter 14 gemeinsam die Gehäusefrontseite einschließlich der Endkanten der Zwischenböden 12, die entsprechend nach innen zurückversetzt sind, ab.

Um die Disc-Halter 14 im eingeschobenen Zustand zu verriegeln, ist an die Frontwandbaugruppe 40 einstückig eine Taste 52 über eine Blattfeder 54 angeformt, die an ihrer dem darunterliegenden Zwischenboden 12 zugekehrten Seite einen Riegel (in Fig. 1 und 2 nicht sichtbar) trägt, welcher in eine in dem Zwischenboden 12 ausgebildete Falle (ebenfalls nicht sichtbar) einrastet. Die Blattfeder 54 ermöglicht das Entriegeln des Disc-Halters 14 durch Hochdrücken der Taste 52 bei eingeschobenem Disc-Halter 14.

Die Tasten 52 aufeinanderfolgender Disc-Halter 14 sind alternierend am einen oder anderen Ende der Frontwand 42 angeordnet, so daß trotz extrem schmaler Disc-Halter 14 und entsprechend schmaler Tasten 52 mit einem Finger immer nur ein Disc-Halter 14 zum Auslösen der Ausschubbewegung entriegelt wird.

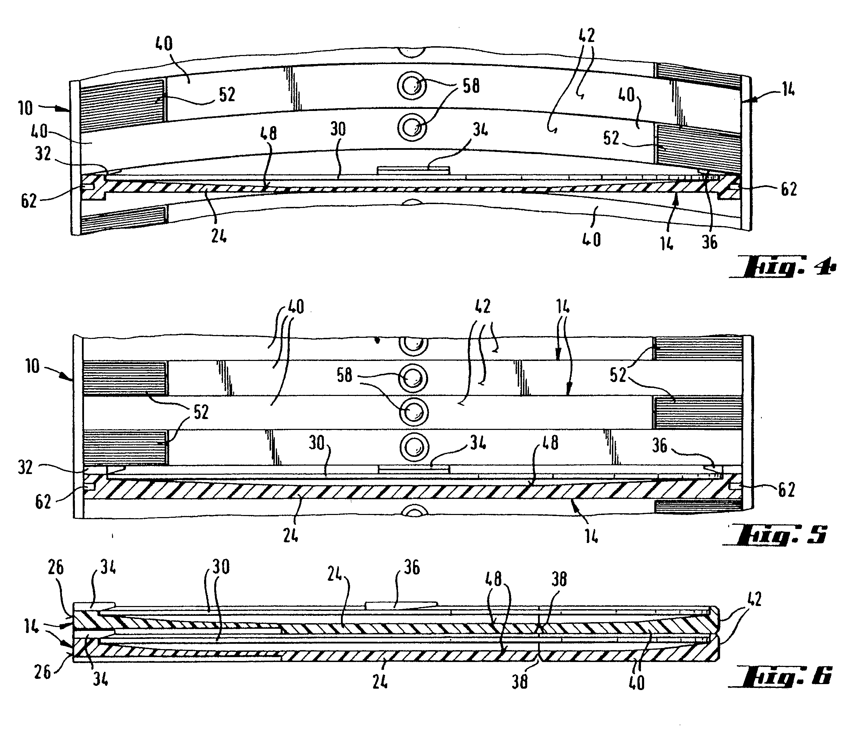

Etwa mittig ist an der Innenseite der Frontwand 42 ein federvorgespannter Taster 56 angeordnet, der ein Anzeigeorgan in Form einer Signalflagge 57 (vgl. Fig. 3) trägt. Wird die Frontwandbaugruppe 40 bei eingelegter Disc 30 hochgeklappt, so trifft der Taster 56 auf die ihm zugekehrt liegende Fläche der Disc 30 und wird dadurch so verschwenkt, daß die Signalflagge in einem auf der Außenseite der Frontwand 42 vorgesehenen Fenster 58 sichtbar wird; die Disc 30 wird dabei von den Niederhaltern 32, 34, 36 abgestützt.

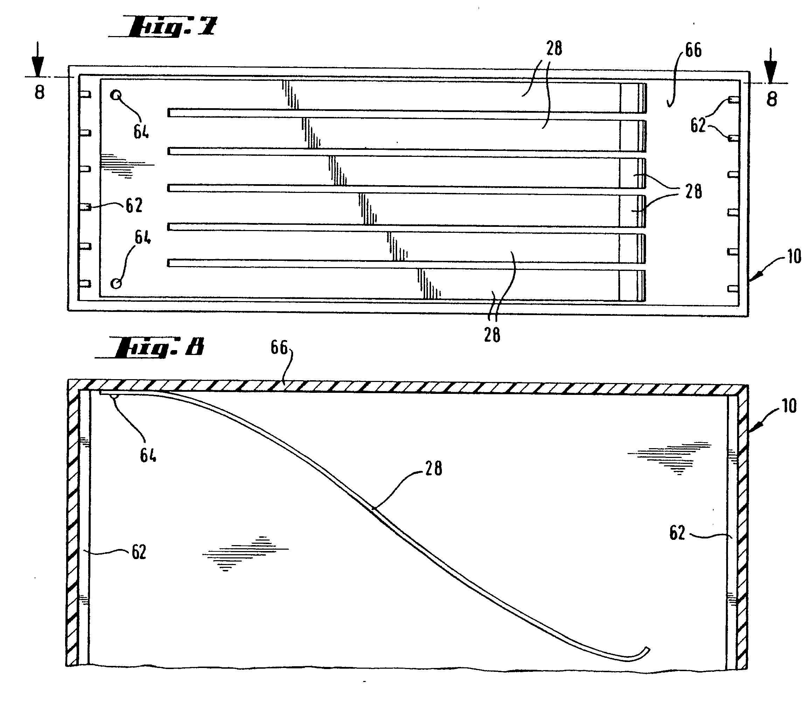

Will man den Vorteil des beidseitigen Kratzschutzes beibehalten, jedoch aus Platzgründen die Zwischenböden 12 weglassen, kann man, wie in Fig. 4 dargestellt, die Unterkante 60 der Frontwandbaugruppe 40 der Disc-Halter 14 gewölbt ausbilden. Läßt man hingegen die Zwischenböden 12 nur weg, Fig. 5, ohne die Disc-Halter 14 zu ändern, so ist auf der Oberseite der Disc 30 kein Kratzschutz mehr gewährleistet. Bei handelsüblichen Compact-Discs 30, die nur auf einer Seite bespurt sind, ist dies jedoch akzeptabel.

Bei nicht vorhandenen Zwischenböden 12 sind die Disc-Halter 14 seitlich längs Stegen 62 des Gehäuses 10 geführt, die in entsprechende Nuten der Disc-Halter 14 greifen.

Gemäß Fig. 6 kann der Niederhalter 34 bei einer Ausführungsform ohne Zwischenböden 12 in eine zu ihm komplementäre Nut des jeweils darüberbefindlichen Disc-Halters 14 greifen. Es wird somit verhindert, daß eine Disc 30 versehentlich über den Niederhalter 34 geschoben wird. Entsprechendes kann auch für die seitlichen Niederhalter 32, 36 vorgesehen werden.

Die Auswerffedern 28 eines Gehäuses 10 sind gemeinsam aus einem einzigen Stanzteil gefertigt, das kammähnlich ausgebildet und bei 64 an der Gehäuserückwand 66 befestigt ist (Fig. 7, 8). Die Auswerffedern 28 sind in die in Fig. 8 erkennbare Form gebogen und stehen bei eingeschobenen Disc-Haltern 14 ständig unter Vorspannung, so daß sie zweckmäßigerweise aus Metall bestehen.

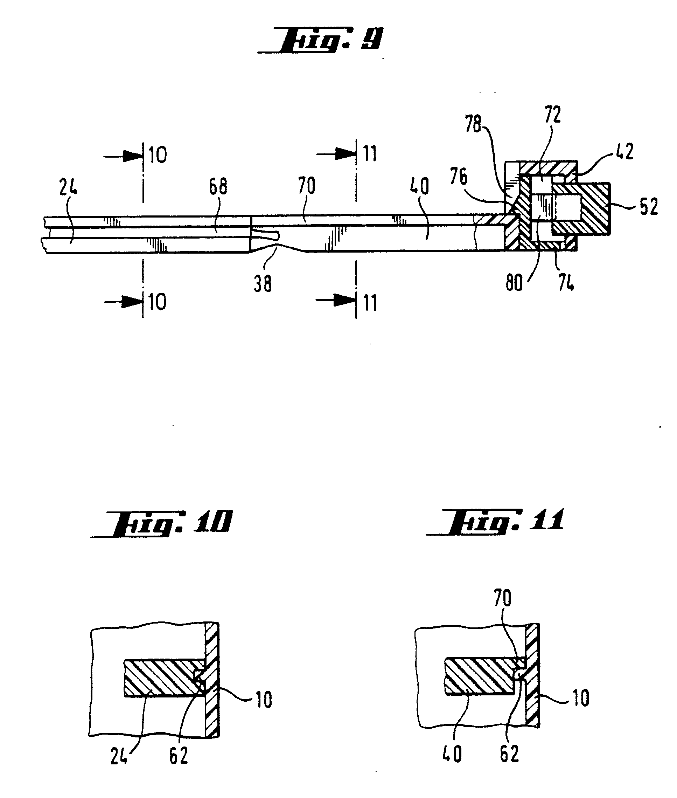

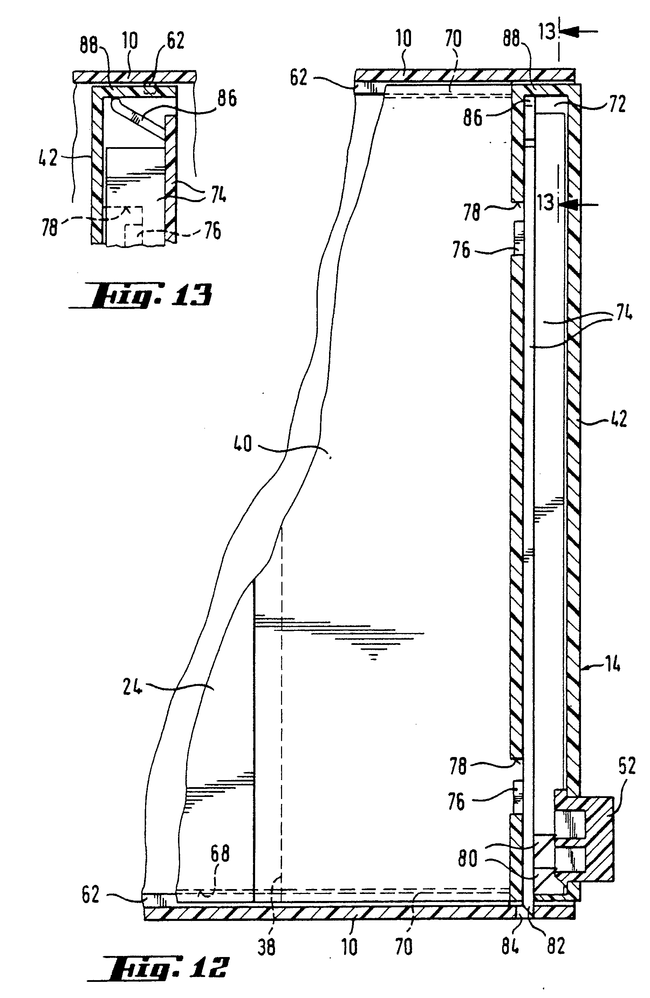

Bei der in den Fig. 9 bis 13 dargestellten Ausführungsform besitzt der Hauptteil 24 seitliche Nuten 68, in die Stege 62 des Gehäuses 10 greifen. Die Frontwandbaugruppe 40 ist mit dem Hauptteil 24 über das Filmgelenk 38 verbunden und besitzt keine seitlichen Nuten, sondern nur obere Stege 70 (vgl. Fig. 11), die sich beim Hochklappen der Frontwandbaugruppe 40 auf die Stege 62 legen. Die Frontwand 42 bildet einen nach unten offenen Kanal 72, in den von unten ein Riegelschieber 74 eingesetzt ist; dessen angeformte Nasen 76 greifen dabei durch Öffnungen 78 in der dem Gehäuse 10 zugekehrten Rückwand des Kanals 72, so daß der Riegelschieber 74 nicht mehr herausfallen kann, wenn er eingesetzt ist, wobei er beim Einsetzen federnd ausgelenkt wird. Die Öffnungen 78 sind jedoch breit genug, damit der Riegelschieber 74 eine begrenzte Bewegung senkrecht zur Ausschubbewegung des Disc-Halters 14 ausführen kann. Zu diesem Zweck sind an den Riegelschieber 74 Keilfortsätze 80 angeformt, auf die eine Taste 52 zum Entriegeln beim Eindrücken aufläuft, wodurch der Riegelschieber 74 seitlich verlagert und sein Riegelfortsatz 82 aus einer Falle 84 des Gehäuses 10 herausgehoben wird. An dem dem Riegelfortsatz 82 abgewandten Ende des Riegelschiebers 74 ist an diesem eine Rückstellfeder 86 angeformt, die sich an dem ihr zugekehrten Wandungsteil 88 des Kanals 72 abstützt. Der Riegelschieber 74 kann auch gewendet eingesetzt werden, d.h. auch in dem Fall, in dem sich die Taste 52 am anderen Ende des Disc-Halters 14 befindet, so daß nur ein Spritzwerkzeug für die Riegelschieber 74 benötigt wird.

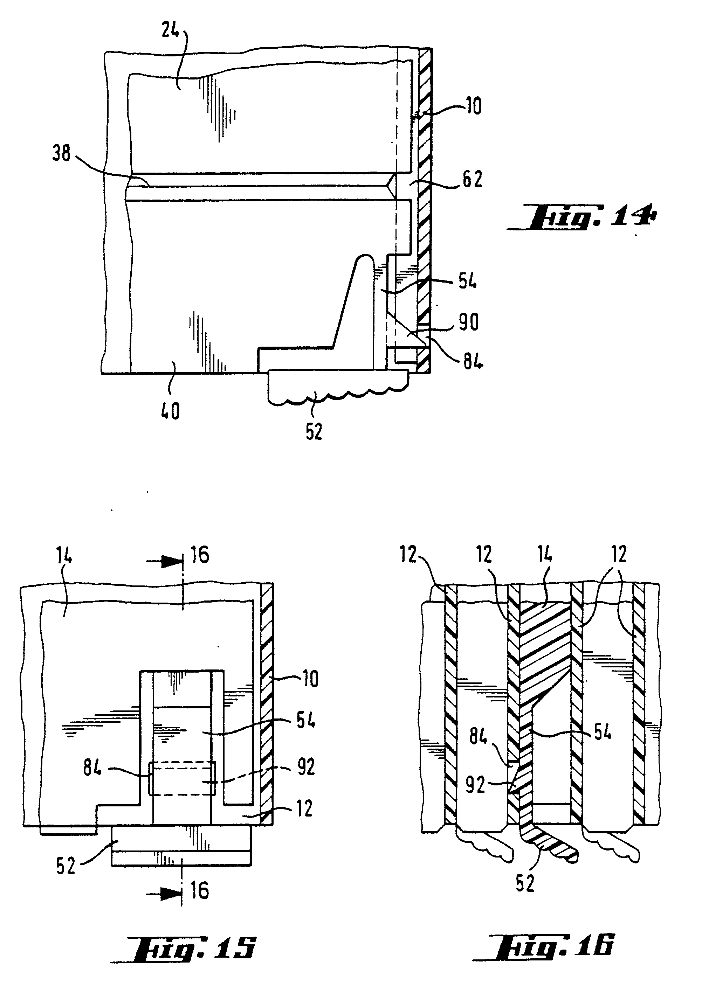

Bei der in Fig. 14 dargestellten weiteren Ausführungsform einer Verriegelung sind das Hauptteil 24 und die Frontwandbaugruppe 40 längs der Stege 62 mittels komplementärer Nuten geführt. In den Bodenabschnitt der Frontwandbaugruppe 40 sind Ausnehmungen eingebracht, so daß eine angeformte Blattfeder 54 stehenbleibt, an deren freiem Ende die Taste 52 vorgesehen ist. Die Blattfeder 54 erlaubt die Auslenkung der Taste 52 in Richtung auf den Bodenabschnitt zu, wobei die Bewegung im wesentlichen parallel zu dessen Ebene verläuft. Bei der Tastenauslenkung wird ein mit dieser verbundener Doppelhaken 90 (doppelt deswegen, weil sich ein Haken oberhalb und der andere unterhalb des Steges 62 befindet) aus einer entsprechenden Falle 84 der Gehäuseseitenwand herausgehoben. Beim Einschieben des Disc-Halters 14 aus der Entnahmeposition rastet der Doppelhaken 90 selbsttätig wieder ein. Hierbei kann der Auslösehub der Taste 52 relativ groß bemessen werden, so daß auch die im verriegelten Zustand im Eingriff befindlichen Flächen entsprechend groß sein dürfen.

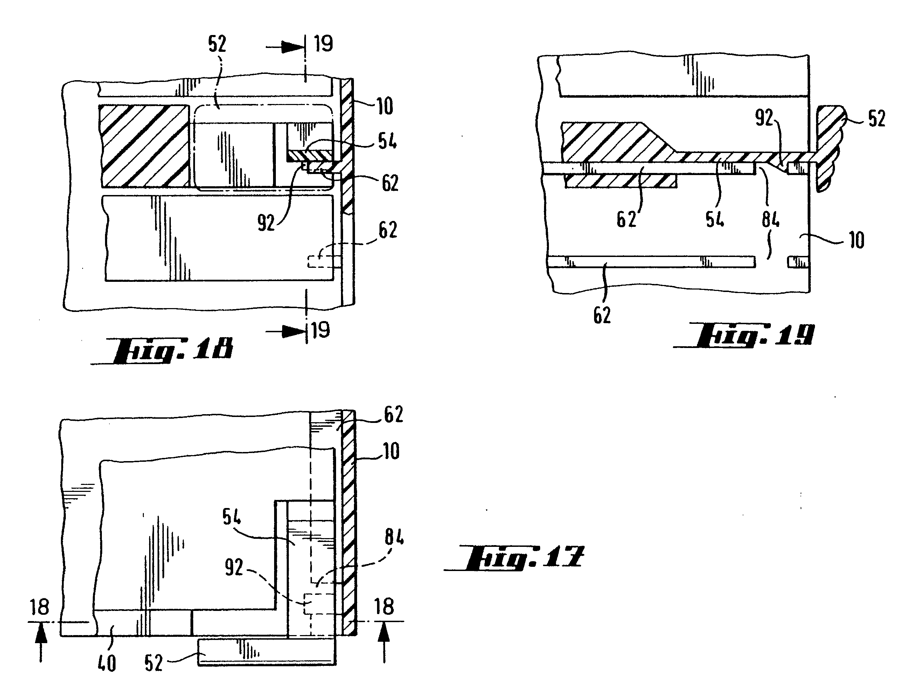

Bei der Ausführungsform nach Fig. 15 und 16 besitzt der Disc-Halter 14 eine angeformte Taste 52 mit einem Riegelhaken 92, die sich aus der im Zwischenboden 12 des Gehäuses 10 vorgesehenen Falle 84 um einen Hub herausheben läßt, der größer ist, als der Höhe des Disc-Halters 14 selbst plus der Dicke des Zwischenbodens 12 minus der Höhe der Taste 52 entspricht, indem das freie Ende der Taste 52 nach vorn herausragt, so daß die Taste 52 leichter betätigbar ist. Wird die Taste 52 betätigt, kann ihr freies Ende vor dem nächsthöheren Disc-Halter 14 vorbeibewegt werden, dessen Taste 52 auf der anderen Seite vorgesehen ist. - Ähnlich ist die Ausführungsform der Fig. 17 bis 19, bei der kein Zwischenboden 12 vorgesehen ist und der Riegelhaken 92 deshalb in einer als Ausschnitt des Steges 62 ausgebildeten Falle 84 an der Seitenwand des Gehäuses 10 einrastet.

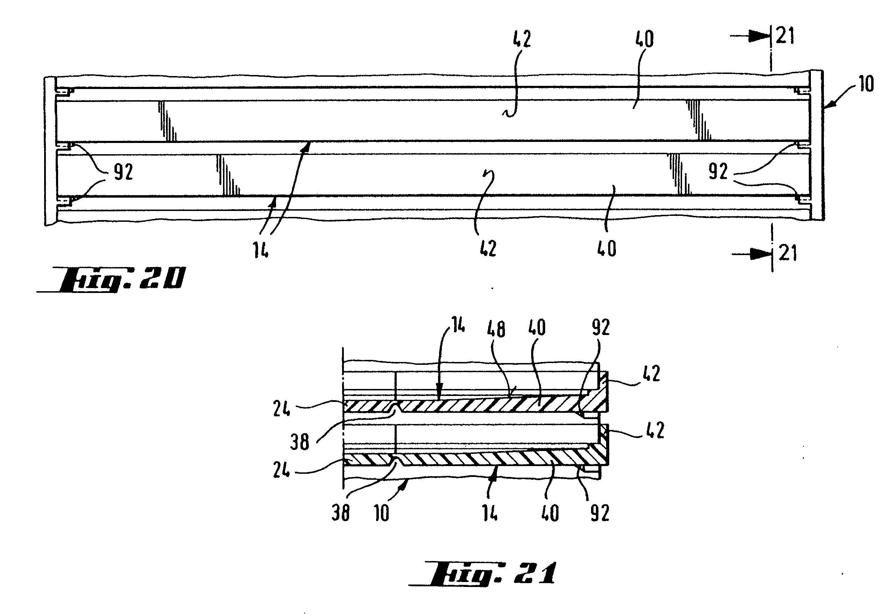

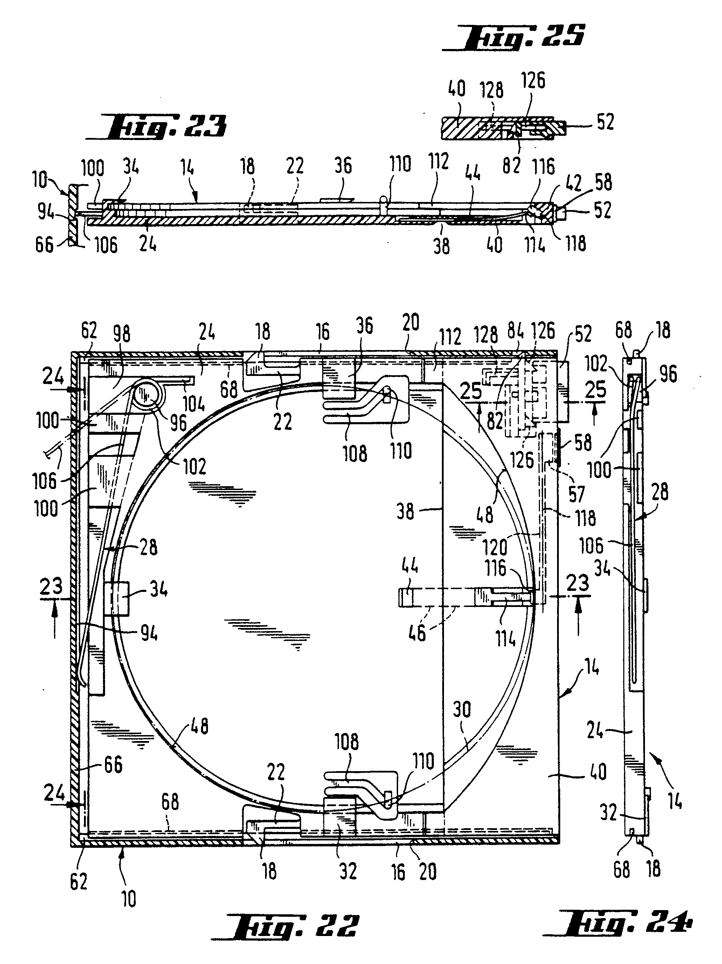

Bei der in den Fig. 20 und 21 dargestellten Ausführungsform wird die Einrastkraft für den Riegelhaken 92 von einer Feder (in diesen Figuren nicht dargestellt, etwa die Blattfeder 44 von Fig. 1) aufgebracht, die die Frontwandbaugruppe 40 in ihre Entnahmeposition vorspannt. Die gesamte Frontwand 42 dient hier als Auslösetaste, indem die Frontwandbaugruppe 40 um das Filmgelenk 38 schwenkend gehoben wird.

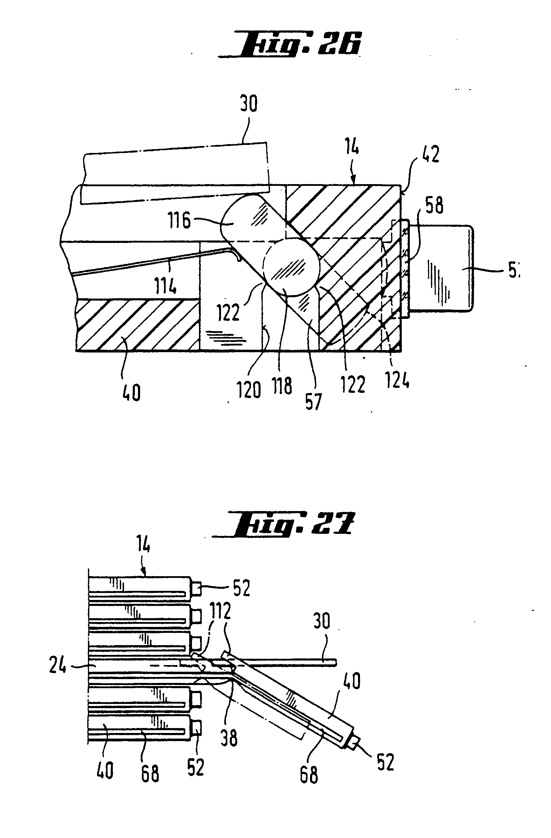

Bei der in den Fig. 22 bis 27 dargestellten Ausführungsform besitzt das Gehäuse 10 innen an die Seitenwandungen angeformte Führungsstege 62, die in entsprechende Führungsnuten 68 der einzelnen Disc-Halter 14 eingreifen, sowie in die Innenseite der Gehäuserückwand 66 eingetiefte Nuten 94 und je eine Falle 84 für jeden Disc-Halter 14 zum Verriegeln hiervon im Gehäuse 10, für jeweils benachbarte Disc-Halter 14 abwechselnd in der einen oder anderen Seitenwandung des Gehäuses 10.

Im hinteren Bereich des Hauptteils 24 außerhalb der wannenförmigen Eintiefung 48 ist in einer Ecke des Hauptteils 24 ein Sockel 96 angeformt, der in einer Vertiefung 98 des Hauptteils 24 sitzt, die wiederum von zwei Stützfortsätzen 100 übergriffen ist, in deren Bereich der Boden der Vertiefung 98 aus spritztechnischen Gründen ausgenommen ist. Auf dem Sockel 96 sitzt ein Curl 102 der in Form einer Schenkelhalsfeder ausgebildeten Auswerffeder 28, von der ein Arm 104 in einer Ausnehmung des Hauptteils 24 festgelegt ist, während sich der andere Arm 106 in der entspannten Position (gestrichelt in Fig. 22 angedeutet) schräg nach hinten erstreckt. Die Auswerffeder 28 ist dabei so gebogen, daß der Arm 106 sich in der Ebene des Disc-Halters 14 befindet, was durch die mit dem Boden der Vertiefung 98 zusammenwirkenden Stützfortsätze 100 sichergestellt ist. Das freie Ende des Arms 106 ist etwas abgerundet. Bei der Montage trifft diese Abrundung in die zugeordnete Nut 94 des Gehäuses 10, wodurch der Disc-Halter 14 in Ausschubrichtung vorgespannt wird, weil die Auswerffeder 28 belastet ist (ausgezogen dargestellt).

Im Bereich der wannenförmigen Eintiefung 48 weist der Hauptteil 24 zwei seitlich gegenüberliegende Durchbrüche auf, in denen sich in der Halterebene federnd auslenkbare zungenartigen Einzugsarme 108 befinden, deren freie Enden einen nach oben abgewinkelten und nach innen umgelegten Abschnitt 110 aufweisen. Die Einzugsarme 108 legen sich mit dem abgewinkelten Abschnitt 110 seitlich an die Disc 30 an, wenn diese in den Disc-Halter 14 eingeschoben wird bzw. ist. Dadurch wird erreicht, daß beim Ausschub des Disc-Halters 14 aus dem Gehäuse 10 unter der Wirkung der Auswerffeder 28 die Disc 30 gebremst wird, so daß sie nicht heraus katapultiert wird, und bei Verwendung des Behälters 10 in einem Kraftfahrzeug Vibrationen der Disc 30 in ihrem Disc-Halter 14 gedämpft werden. Beim Einschieben einer Disc 30 sorgen die Einzugsarme 108 ferner dafür, daß die Disc 30 zuverlässig bis in ihre Endlage gelangt, so daß dann auch die Frontwandbaugruppe 40 hochgeklappt werden kann. Der Benutzer spürt die Überwindung der Bremskraft der Einzugsarme 108 deutlich, so daß er gewiß sein kann, daß die Disc 30 sicher verstaut ist. Die einwärts abgekröpften Enden der Abschnitte 110 der Einzugsarme 108 übergreifen dabei die Disc 30 und stellen sicher, daß die Einzugsarme 108 nicht unter die Disc 30 geraten können.

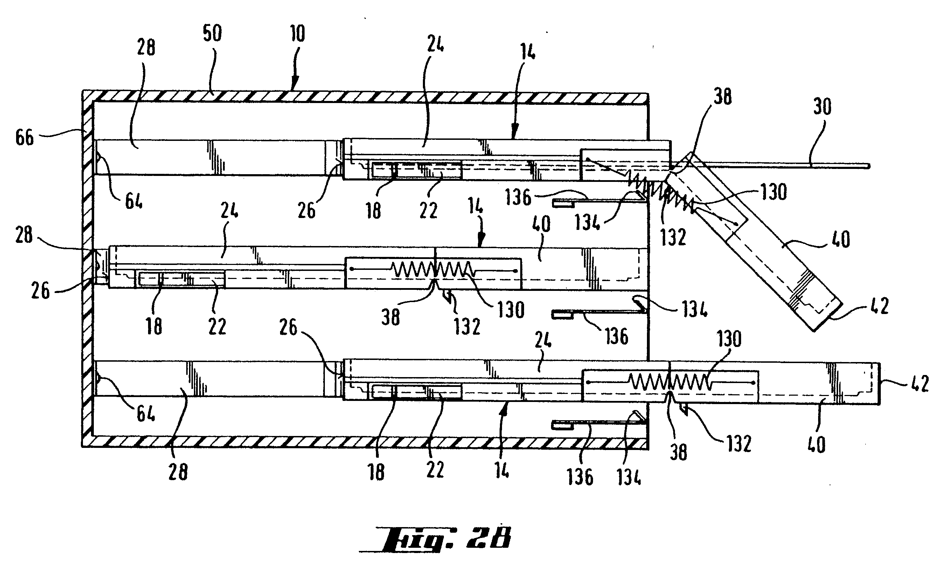

In der Mitte des Filmgelenks 38 ist eine das Filmgelenk 38 überbrückende Blattfeder 44 in entsprechende Ausnehmungen des Hauptteils 24 und der Frontwandbaugruppe 40 eingesetzt. Die Blattfeder 44 übt auf die Frontwandbaugruppe 40 eine Vorspannung in Richtung deren abgeklappter Position aus und bildet zugleich den Anschlag zur Begrenzung der Abklappbewegung, wie im Zusammenhang mit Fig. 1 erläutert. Im Bereich der seitlichen Enden des Filmgelenks 38 erstreckt sich die Frontwandbaugruppe 40 mit zwei Fortsätzen 112 in entsprechende Ausschnitte des Hauptteils 24. Bei abgeklappter Frontwandbaugruppe 40 sperren die Fortsätze 112 den Einschub des Disc-Halters 14 durch Auflaufen auf die Frontwand 42 des jeweils darüber befindlichen Disc-Halters 14 bzw. beim obersten Disc-Halter 14 auf die Gehäusedeckwand 50. Ohne diese Maßnahmen bestünde die Möglichkeit, daß der Benutzer versucht, durch Druck auf die freiliegende Kante der Disc 30 den Disc-Halter 14 einzuschieben. Die dann hochklappende Frontwandbaugruppe 40 könnte die Finger klemmen. Die Sperrwirkung ist in Fig. 27 strichpunktiert angedeutet. - Die Frontwandbaugruppe 40 verlängert das Hauptteil 24 nach vorn, indem sich sowohl die Eintiefung 48 in die Frontwandbaugruppe 40 erstreckt, als auch die Führungsnuten 62 sich im verbleibenden dickeren Teil der Frontwandbaugruppe 40 fortsetzen.

Ein sehr schmaler Endstreifen 114 der Blattfeder 44 ist etwas nach oben abgekröpft und ragt bis unter einen Tastarm 116 an einem Ende eines Schwenkhebels 118, dessen Welle drehbar am Grund einer langgestreckten Einsenkung 120 gelagert ist. Die Einsenkung 120 erstreckt sich von der Unterseite der Frontwandbaugruppe 40 her parallel zur Frontwand 42 über etwa deren halbe Breite, und sie weist nahe ihrem Grund Verengungen 122 auf, so daß die Welle des Schwenkhebels 118, einmal eingeschnappt, nicht mehr herausfallen kann. Am anderen Ende des Schwenkhebels 118 erstreckt sich, um 180° bezüglich des Tastarms 116 versetzt, ein Anzeigeorgan 57 in Form eines Anzeigearms.

Die Stirnfläche 124 des Anzeigearms 57 ist eingefärbt oder mit einer anderen Markierung versehen, die durch ein in die Frontwand 42 eingefügtes Fenster 58 erkennbar ist. Wird eine Disc 30 in den Disc-Halter 14 eingelegt, drückt ihre Kante auf den Tastarm 116 unter Auslenkung des Endstreifens 114, wodurch der Schwenkhebel 118 verschwenkt wird und die Stirnfläche 124 hinter dem Fenster 58 erscheint. Hiermit wird signalisiert, daß der betreffende Disc-Halter 14 belegt ist. Im anderen Falle wird der Schwenkhebel 118 durch den Endstreifen 114 in die andere, d.h. Leeranzeigeposition zurückgedreht.

Zwischen dem Fenster 58 und der Gehäuseseitenwandung erstreckt sich eine Taste 52 durch die Frontwand 42 und ist senkrecht zu dieser durch Fingerdruck verlagerbar. Dabei drückt sie auf zwei Keile 126, angeformt an einen parallel zur Frontwand 42 verschiebbaren Riegel 82, der von einem ebenfalls angeformten Federarm 128 in die in Fig. 22 erkennbare Schließlage vergespannt ist. Die beiden Keile 126 greifen dabei in jeweils eine Ausnehmung der Taste 52.

Wie in Fig. 25 erkennbar ist, wird die Taste 52 von vorn, der Riegel 82 von unten in die Frontwandbaugruppe 40 eingesetzt; die Fortsätze an den Teilen, die ein Einschnappen ermöglichen, sind hier nicht im einzelnen dargestellt.

Sowohl die Belegtanzeigen als auch die Tasten 52 mit zugehörigem Riegel 82 sind bei benachbarten Disc-Haltern 14 abwechselnd rechts und links, gesehen auf die Frontwand 42, angeordnet, um trotz der relativ geringen Höhenabmessungen eine bequeme Bedienung zu ermöglichen.

Die Darstellungen der Fig. 28 bis 31 sind weitgehend vereinfacht, um nur das wesentliche zu zeigen.

Bei der Ausführungsform nach Fig. 28 ist ein Behälter im Längsschnitt dargestellt, wobei nur drei Disc-Halter 14, der mittlere im eingeschobenen Zustand, der obere im ausgefahrenen Zustand und der untere unmittelbar vor dem Wiedereinschub, gezeigt sind.

Hierbei klappt die Frontwandbaugruppe 40 beim Ausfahren aus dem Gehäuse 10 ab. Bevor sie jedoch wieder eingeschoben wird, nachdem der Benutzer sie wieder hochgeklappt hat, verharrt sie in dieser Stellung, was die Bedienung bequemer macht. Beide Schwenklagen der Frontwandbaugruppe 40 sind daher stabil.

Die Blattfeder 44 zwischen Hauptteil 24 und Frontwandbaugruppe 40 ist durch ein Paar Zugfedern 130 ersetzt, die seitlich in Ausnehmungen beider Teile 24, 40 eingelassen und verankert sind. Die Anordnung ist so getroffen, daß die ständig gespannten Federn 130 ihre größte Zugkraft in einer Mittelposition der Frontwandbaugruppe 40 ausüben, also in einer Position labilen Gleichgewichts. Die beiden Endlagen sind durch Anschläge festgelegt und so stabilisiert.

In der eingeschobenen Stellung steht die Frontwandbaugruppe 40 ausgefluchtet mit dem Hauptteil 24. An ihrer Unterseite ist ein Fortsatz 132 vorgesehen, der nach Entriegeln des Disc-Halters 14 auf einen Haken 134 aufläuft, der am Ende einer Blattfeder 136 ausgebildet ist. Der Haken 134 hält den Fortsatz 132 solange fest, bis die Frontwandbaugruppe 40 in ihre andere stabile Endlage umgeklappt ist, wonach der Fortsatz 132 von dem Haken 134 abgleiten kann. Wenn der Benutzer dann die Frontwandbaugruppe 40 zurückgeklappt hat und den Disc-Halter 14 wieder einschiebt, lenkt der Fortsatz 132 beim Überlaufen des Hakens 134 die Blattfeder 136 einfach nach unten aus, so daß sich ein Froschfederprinzip ergibt.

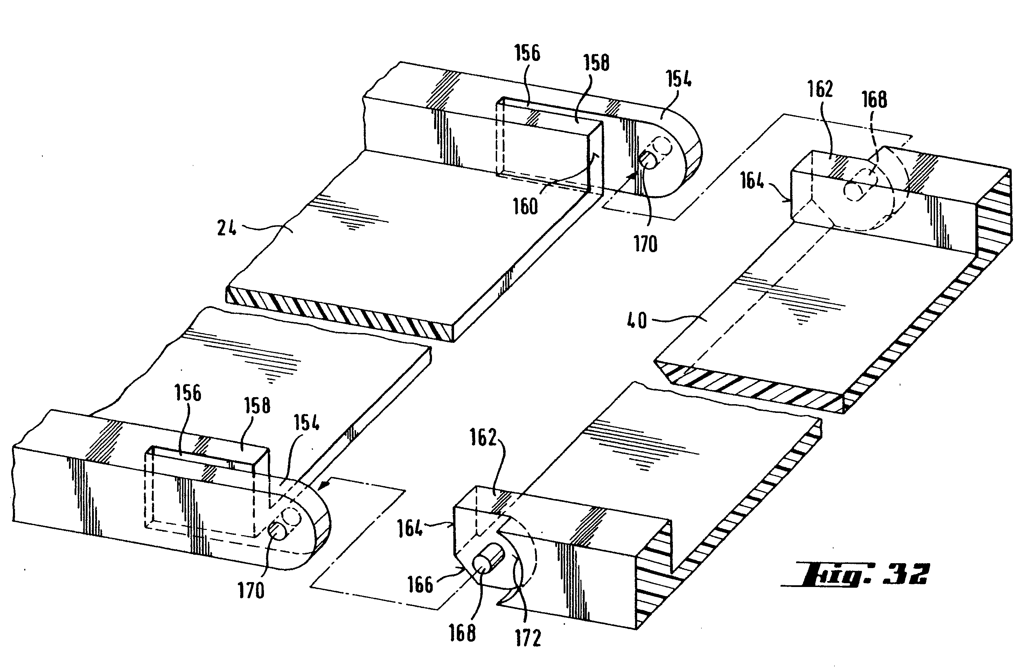

Bei der weiteren Ausführungsform eines Froschfederprinzips der Fig. 29 bis 31 ist die Frontwandbaugruppe 40 ständig von der Blattfeder 44 in die abgeklappte Position vorgespannt, die in Fig. 31 dargestellt ist. Bringt der Benutzer sie durch Hochklappen in Ausfluchtung mit dem Hauptteil 24, so hängt sich ein Haken 138 an der Frontwandbaugruppe 40 an einer Falle 140 am Hauptteil 24 ein. Dabei wird der Haken 138 nach oben elastisch ausgelenkt. Die Frontwandbaugruppe 40 wird so gehalten, und der gesamte Disc-Halter 14 kann bequem eingeschoben werden. Im vollständig eingeschobenen Zustand hingegen soll wieder eine Entriegelung erfolgen. Hierfür ist im Gehäuse 10 ein Auslösenocken 142 vorgesehen, auf den beim Einschub ein seitlicher Fortsatz 144 des Hakens 138 aufläuft. Da der Haken 138 nicht nur vertikal auslenkbar ist, sondern auch noch um einen Zapfen 146 in einer Ebene senkrecht dazu ("horizontal") schwenken kann, wird er von dem Auslösenocken 142 ausgelenkt und gleitet seitlich von der Falle 140 ab. Dabei überläuft er noch unter erneuter Auslenkung in "vertikaler" Richtung ein am Hauptteil 24 angebrachtes Sperrstück 148, hinter dem er wieder in die entspannte Lage in Vertikalrichtung zurückfedert; zugleich wird eine Rückstellfeder 150, die am Haken 138 angebracht ist und sich mit ihrem freien Ende an einem Fortsatz 152 nahe der Frontwand 42 abstützt, vorgespannt, die den Haken 138 in die Verriegelungsposition vorspannt. Sobald die Frontwandbaugruppe 40 umgeklappt wird, kommt der Haken 138 vom Sperrstück 148 frei und kann unter der Wirkung der Rückstellfeder 150 in die Ausgangsposition zurückkehren, vorbereitet für ein erneutes Einhängen in der Falle 140.

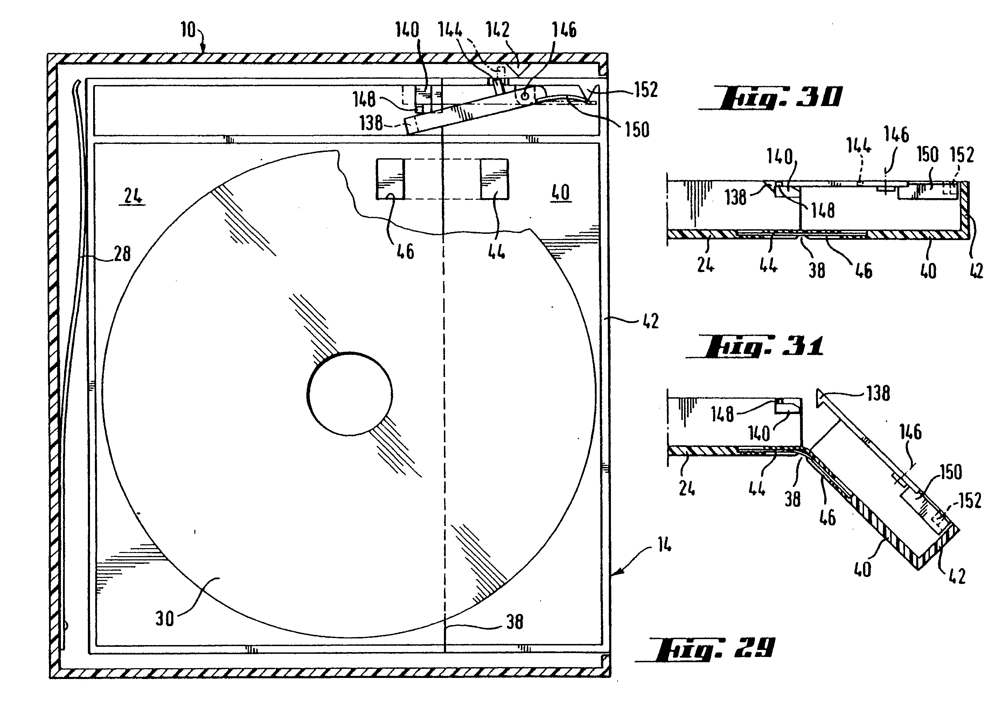

Soweit in vorstehenden Absatz die Begriffe "horizontal" bzw. "vertikal" verwendet wurden, beziehen sie sich auf die Darstellung nach Fig. 30 bzw. 31, gemäß denen sich die Frontwand 42 in einer Vertikalebene und die Disc 30 in einer Horizontalebene befinden. Dies definiert nicht unbedingt die Einbau- oder Benutzungslage des Behälters. So können die Disc-Halter 14 auch vertikal aufwärts aus dem Gehäuse 10 ausgestoßen werden, ohne daß die geschilderten Funktionen beeinträchtigt werden. Dies gilt auch für die übrigen Ausführungsbeispiele.

Bei der in Fig. 32 dargestellten Ausführungsform eines Froschfederprinzips besitzt das Hauptteil 24 frontseitig auf beiden Seiten je einen Fortsatz 154, der durch einen Schlitz 156 von einem Steg 158 des Hauptteils 24 an der Innenseite des Fortsatzes 154 getrennt ist. Die Stege 158 enden mit der Frontkante des Hauptteils 24, gegenüber der die Fortsätze 154 vorragen, und besitzen Stirnflächen 160 senkrecht zur Ebene des Hauptteils 24. Die Frontwandbaugruppe 40 besitzt seitlich Stege 162, die bei hochgeklappter Frontwandbaugruppe 40 eine parallel zur Stirnfläche 160 verlaufende, dem Hauptteil 24 zugewandte Stirnfläche 164 und eine sich daran zur Unterseite hin anschließende Stirnfläche 166 aufweisen, die in einem Winkel zur Stirnfläche 164 verläuft. Die Stege 162 besitzen nach außen gerichtete Zapfen 168, die in entsprechende Löcher 170 der Fortsätze 154 eingeschnappt werden können, zu welchem Zweck die Schlitze 156 dienen. Die Fortsätze 154 erstrecken sich dann seitlich von den Stegen 162, an die sich seitlich kreisbogenförmige Führungsflächen 172 anschließen, die mit den korrespondierend abgerundeten freien Enden der Fortsätze 154 in Eingriff stehen, so daß die Frontwandbaugruppe 40 drehbar in Bezug auf das Hauptteil 24 angeordnet ist.

Im zusammengesetzten Zustand bei hochgeklappter Frontwandbaugruppe 40 stehen die beiden Stirnflächen 160 und 164 in Eingriff und definieren einen stabilen Zustand der Frontwandbaugruppe 40 in Bezug auf das Hauptteil 24. Im um einen durch den Winkel zwischen den Stirnflächen 164, 166 definierten Winkel abgeklappten Zustand der Frontwandbaugruppe 40 in Bezug auf das Hauptteil 24 stehen dagegen die Stirnwände 160 und 166 in Eingriff und definieren ebenfalls einen stabilen Zustand. Der Übergang vom einen in den anderen stabilen Zustand erfolgt durch entsprechende Betätigung der Frontwandbaugruppe 40, wodurch diese über die Kante zwischen den Stirnwänden 164, 166 bei geringer elastischer Deformation der Zapfen 168 geklappt wird. Ein Filmgelenk 38 erübrigt sich hierbei.

Wie in Fig. 33 dargestellt kann die Auswerffederanordnung aus zwei kammartig ausgebildeten Auswerffedern 28 bestehen, wobei die Zungen 28a jeder Auswerffeder 28 an jeweils jedem zweiten Disc-Halter 14 angreifen und sich daher abwechselnd von der einen und der anderen Seite des Gehäuses 10 in Richtung zur anderen Seite nahezu über die Breite des Gehäuses 10 erstrecken. Die beiden Auswerffedern 28 sind benachbart zur Rückwand 66 des Gehäuses 10 im seitlichen Eckbereich befestigt. Damit sich ein im wesentlichen gleiches Biegemoment über die Länge der Zungen 28a ergibt, sind diese zum freien Ende hin in ihrer Breite verjüngt. Die beiden Auswerffedern 28 sind gleich, aber spiegelbildlich in das Gehäuse 10 eingesetzt, vgl. Fig. 33. Hierbei ist für jede Auswerffeder 28 ein unterer und ein oberer Anschlag 173 bzw. 174 vorgesehen, wobei die beiden unteren, in ihrer Höhe entsprechend versetzten Anschläge 173 Stufen des Gehäusebodens 175 oder flächige Abschnitte über dem Gehäuseboden 175 sind, während die beiden oberen Anschläge 174 von entsprechenden Stufen oder flächigen Abschnitten bzw. von der Gehäusedeckwand 50 gebildet werden. Gegebenenfalls kann auch der Gehäuseboden 175 als einer der unteren Anschläge dienen, jedoch ist beim dargestellten Ausführungsbeispiel eine Stapeleinrichtung zum Stapeln mehrerer Gehäuse 10 übereinander vorgesehen, die mit Abstand zueinander angeordnete schwalbenschwanzförmige Leisten 176 mit entsprechenden Nuten 177 im Gehäuseboden 175 aufweist, zu welchem Zweck im Inneren des Gehäuses 10 im Bereich der Nuten 177 entsprechende, die Nuten überdeckende Rippen 178 vorgesehen sind . Daher muß sich in diesem Fall auch der tiefere Anschlag 173 mindestens etwa in Höhe der Rippen 178 befinden.

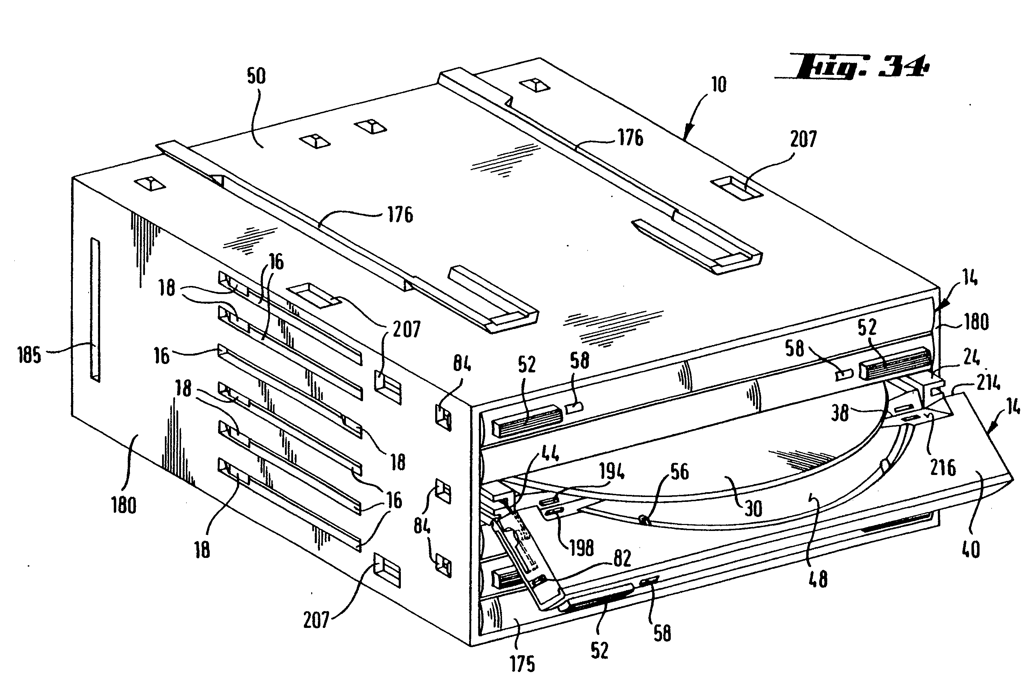

Fig. 35 zeigt eine mögliche Montierung der kammartigen Auswerffedern 28 gemäß Fig 33. Hierzu ist an der Rückseite des Gehäuses 10 beidseitig jeweils eine Einführöffnung 179 entsprechend der Höhe der Auswerffeder 28 vorgesehen, die entsprechend den Montagehöhen der beiden versetzt angeordneten Auswerffedern 28 versetzt sind. Die Einführöffnung 179 wird durch die benachbarte Seitenwandung 180, die die Stege 62 trägt, durch einen sich über die Höhe der Auswerffeder 28 erstreckenden, einwärts in das Gehäuse 10 gerichteten, an der Seitenwandung 180 angeformten Steg 181 und einen sich ebenfalls über die Höhe der Auswerffeder 28 erstreckenden, einwärts in das Gehäuse 10 gerichteten, aber an der Gehäuserückwand 66 angeformten Steg 182 begrenzt, wobei zwischen den Stegen 181 und 182 genügend Platz gelassen ist, so daß die Auswerffeder 28 durch Einführöffnung 179 zwischen den Stegen 181, 182 hindurch in das Gehäuse 10 einführbar ist. An dem Steg 181 ist wenigstens eine Rippe 183 angeformt, die sich in Richtung des Stegs 181 einwärts, d.h. parallel zur Gehäuserückwand 66, erstreckt und dann in einem rechten Winkel hierzu in Richtung auf die Gehäuserückwand 66 verläuft und mit dieser und dem Steg 182 verbunden ist, wobei letzterer benachbart zur Rippe 183 unterbrochen ist. Zwischen der Stirnseite des Stegs 182 und der Rippe 183 befindet sich genügend Platz, um die Auswerffeder 28 über die Einführöffnung 179 einzuführen. Benachbart zum Steg 181 befindet sich auf der der Gehäuserückwand 66 zugekehrten Seite ein Anschlag 184 an der Innenseite der Seitenwandung 180, der in einem Abstand etwa gleich der Stärke der Auswerffeder 28 von dem Steg 181 angeordnet ist. Damit der Anschlag federnd ausweichen kann, ist ein Schlitz 185 benachbart und parallel zu dem Steg 181 in der Seitenwandung 180 vorgesehen, der sich jedoch über weniger als die Höhe der Auswerffeder 28 erstreckt. Der untere Anschlag 173 wird von einem Verbindungsstück für die Stege 181, 182 an deren unteren Enden, das parallel zum Gehäuseboden 175 verläuft, gebildet. Wird die Auswerffeder 28 über die Einführöffnung 179 eingeführt, dient der Anschlag 173 sowie ein oberer Anschlag 174 (gegebenenfalls die Gehäusedeckwand 50) zur Höhenfestlegung, während die eine oder mehrere Rippen 183 verhindern, daß die Auswerffeder 28 ins Gehäuse rutschen kann. Der Anschlag 184, der beim Eindrücken der Auswerffeder 28 infolge des benachbarten Schlitzes 185 federnd ausweicht und dann die Auswerffeder 28 zwischen sich und den Steg 181 einklemmt, verhindert ein Entfernen der eingesetzten Auswerffeder 28 nach hinten durch die Einführöffnung 179. Da der Schlitz 185 sich nicht über die gesamte Höhe der Auswerffeder 28 erstreckt, kann letztere auch nicht durch den Schlitz 185 herausrutschen. Zur Verstärkung des Stegs 182 sind Verstärkungsrippen 186, die einstückig mit der Gehäuserückwand 66 ausgebildet sind und sich in Höhe der jeweiligen Zungen 28a erstrecken, vorgesehen. Zur Verstärkung des Stegs 181 enden die Stege 62 in mit dem Steg 181 verbundenen Verstärkungsrippen 187.

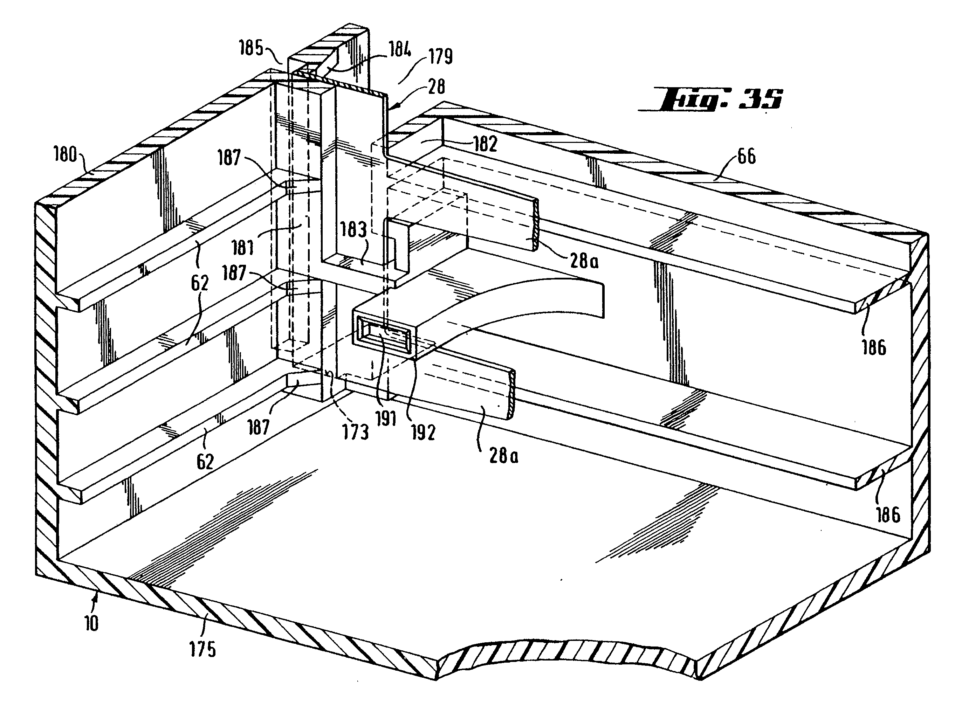

Bei der in Fig. 36 gezeigten Ausführungsform führt zum unteren Anschlag 173 eine Rampe 188 als Einführhilfe für die Positionierung der Auswerffeder 28, wenn diese durch die vordere Gehäuseöffnung eingeführt werden soll. Außerdem besitzt die Auswerffeder 28 mindestens eine ausgestellte Nase 189, die die Auswerffeder 28 in der eingesetzten Position gegenüber dem Steg 182 derart sichert, daß die Auswerffeder 28 nicht ins Gehäuse 10 rutschen kann. Hierbei kann auch die Auswerffeder 28 von hinten durch die Einführöffnung 179 montiert werden.

Bei der in Fig. 33 dargestellten Ausführungsform besitzt der Steg 182 in Richtung zur gegenüberliegenden Seitenwandung 180 ausgestellte Abschnitte, die in dieser Figur sichtbar sind.

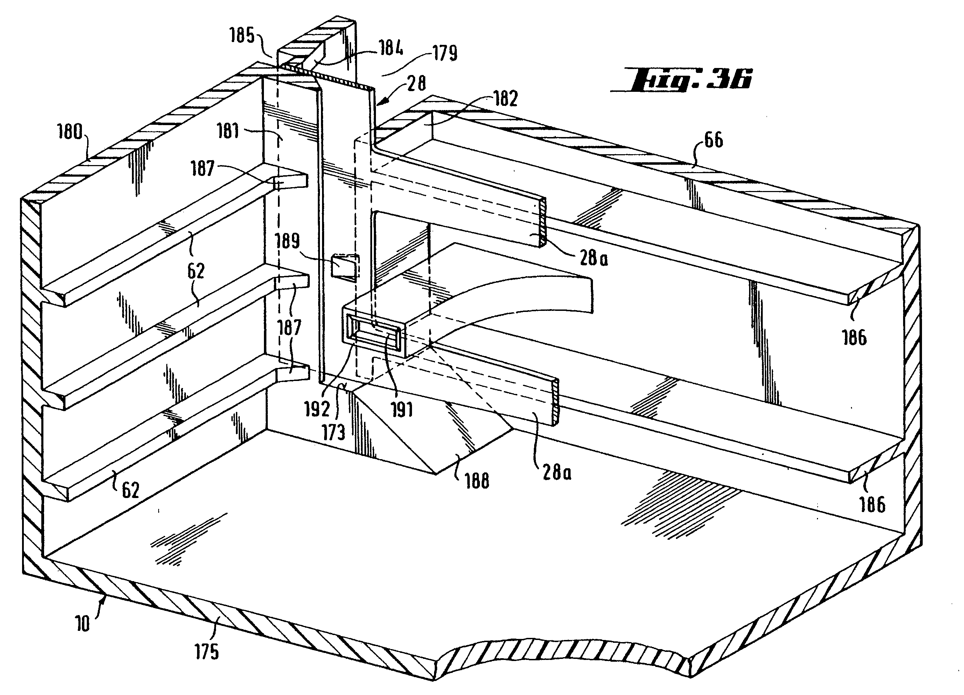

Wie insbesondere aus Fig. 37 und 40 ersichtlich ist, kann der Behälter mit Anzeigen, ob sich in den einzelnen Disc-Haltern 14 jeweils eine Disc 30 befindet oder nicht, versehen sein, die leuchten, so daß die Anzeigen auch im Dunkeln erkennbar sind. Zu diesem Zweck ist insbesondere vorgesehen, auf der Rückseite des Gehäuses 10 eine Lichtquelle 190, etwa eine Glühbirne, im Zentrum einer Reihe von hiervon ausgehenden Lichtleitern 191 anzuordnen. Die Lichtleiter 191, die in einer Anzahl entsprechend der Anzahl der vorgesehenen Disc-Halter 14 des Behälters vorhanden sind, erstrecken sich spinnenartig von der Lichtquelle 190 auswärts zu den seitlichen Bereichen der Gehäuserückwand 66 in die jeweilige Höhe des zugehörigen Disc-Halters 14 und dort durch die Gehäuserückwand 66 in den Behälter hinein. An die Gehäuserückwand 66 sind sich einwärts in das Gehäuse 10 erstreckende Stutzen 192 mit rechteckigem Querschnitt entsprechend dem Querschnitt der Lichtleiter 191 angeformt. Die Lichtleiter 191 enden ein Stück vor dem freien Ende der Stutzen 192 in diesen. Wie aus Fig. 33 ersichtlich ist, befinden sich die Stutzen 192 benachbart zu den freien Enden der Zungen 28a der Auswerffedern 28. Die Disc-Halter 14 besitzen unterseitig eine sich zur Frontwand 42 hin erstreckende Rinne 193 zur Aufnahme eines Lichtleiters 194 mit gleichem Querschnitt wie die Lichtleiter 191, die mittels einer Deckleiste 195 zur Unterseite des Disc-Halters 14 hin verschlossen ist. Die Deckleiste 195 ist beispielsweise über Verschnappungen 196 mit dem Disc-Halter 14 verbunden. Benachbart zu dem Stutzen 192 besitzt der Disc-Halter 14 eine den Stutzen 192 teilweise umgreifende Ausnehmung 197, in der der Lichtleiter 194 mündet, so daß im eingeschobenen Zustand des Disc-Halters 14 der Lichtleiter 194 in den Stutzen 192 ragt und mit seiner Stirnseite der benachbarten Stirnseite des Lichtleiters 191 gegenüberliegt, so daß eine Lichtschleuse gebildet wird, die zudem das Austreten von Streulicht verhindert.

Die Rinne 193 setzt sich in die Frontwandbaugruppe 40 fort, wobei das Filmgelenk 38 entsprechend unterbrochen ist, und endet vor der Frontwand 42 benachbart zum Fenster 58, das seinerseits benachbart zur Taste 52 angeordnet ist. Die Rinne 193 nimmt in der Frontwandbaugruppe 40 ebenfalls einen Lichtleiter 198 mit dem gleichen Querschnitt wie die Lichtleiter 191, 194 auf. Zwischen dem frontwandseitigen Ende des Lichtleiters 198 und dem Fenster 58 ist das Anzeigeorgan 57 in Form einer Signalflagge angeordnet, das einen Schwenkarm 199 in einem Lager 200 mit offenen Lagerpfannen in der Frontwandbaugruppe 40 gelagert ist. Die Signalflagge 57 kann zwei Abschnitte mit unterschiedlicher Farbe oder einen transparenten und einen nicht transparenten Abschnitt aufweisen, die entsprechend der Belegung oder Nichtbelegung des Disc-Halters 14 vor dem Fenster 58 erscheinen und eine entsprechende Anzeige liefern. Das freie Ende des Schwenkhebels 199, das als Taster 56 dient, ragt in den Auflagebereich einer Disc 30 auf dem Disc-Halter 14, so daß durch Einlegen einer Disc 30 der Schwenkhebel 199 heruntergedrückt und die Signalflagge 57 entsprechend verschwenkt wird. Die Rückstellung erfolgt über eine Rückstellfeder 201. Gemäß Fig. 37 und 40 handelt es sich dabei um eine Drahtfeder, die mit einem Ende an dem freien Ende des Schwenkhebels 199 angreift.

Die als Drahtfeder ausgebildete Rückstellfeder 201, deren Mittelabschnitt in der Frontwandbaugruppe 40 festgelegt ist, dient hierbei gleichzeitig mit ihrem anderen freien Ende als Rückstellfeder für den Riegelschieber 74, dessen Keilfortsatz 80 mit der Taste 52 zum Verschieben des Riegelschiebers 74 entgegen der Kraft der Rückstellfeder 201 in Eingriff steht, so daß der Riegelfortsatz 82 außer Eingriff mit der Falle 84 gelangen und der entsprechende Disc-Halter 14 durch die Auswerffeder 28 ausgefahren werden kann.

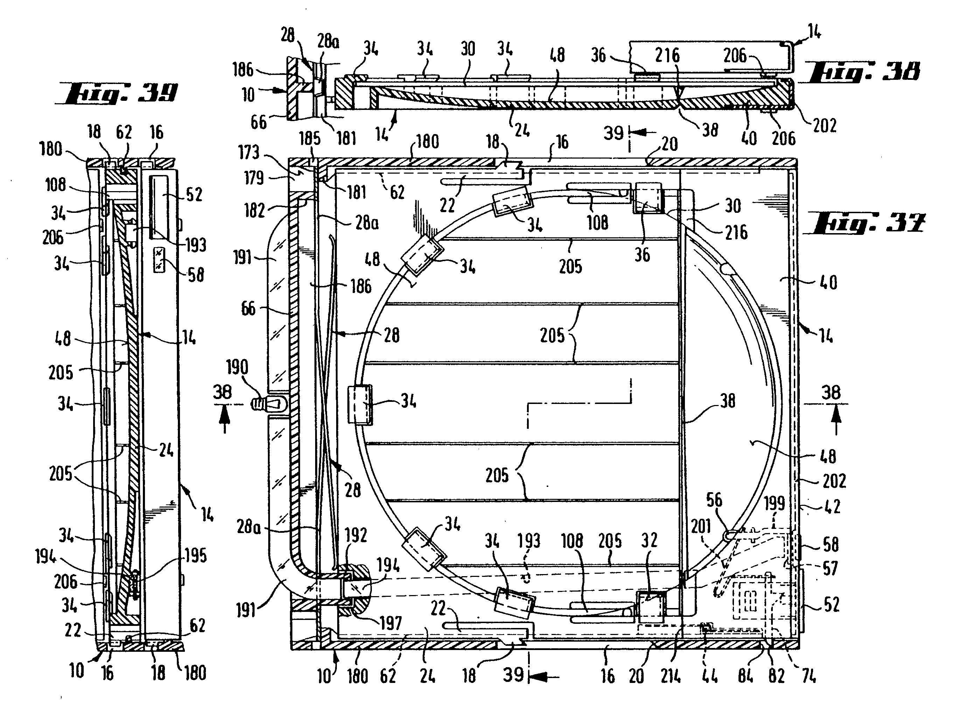

Eine Abdeckung 202, die, wie Fig. 38 zeigt, von der Oberseite der Frontwandbaugruppe 40 bis auf deren Unterseite reicht und den Verriegelungs- und Signalflaggenmechanismus abdeckt, kann durch Schnappverbindungen 203 mit der Frontwandbaugruppe 40 verbunden und mittels Frontzentrierungen 204 zentriert angebracht werden.

Der Disc-Halter 14 kann insbesondere spiegelsymmetrisch zur Mittelebene in Ausschubrichtung und senkrecht zur Darstellungsebene von Fig. 37 und 40 ausgebildet sein, so daß die Taste 52, der Riegelschieber 74, das plattenförmige Hauptteil 24, die Frontwandbaugruppe 40, das Fenster 58, die Lichtleiter 194, 198, die Rückstellfeder 201 und die Deckleiste 195 sowohl rechts- als auch linksseitig verwendet werden können.

Wie aus den Fig. 37 und 40 ersichtlich ist, kann man als Rückstellfeder 44 für die Verstellung der Frontwandbaugruppe 40 sowohl eine Schenkelfeder als auch eine Blattfeder verwenden.

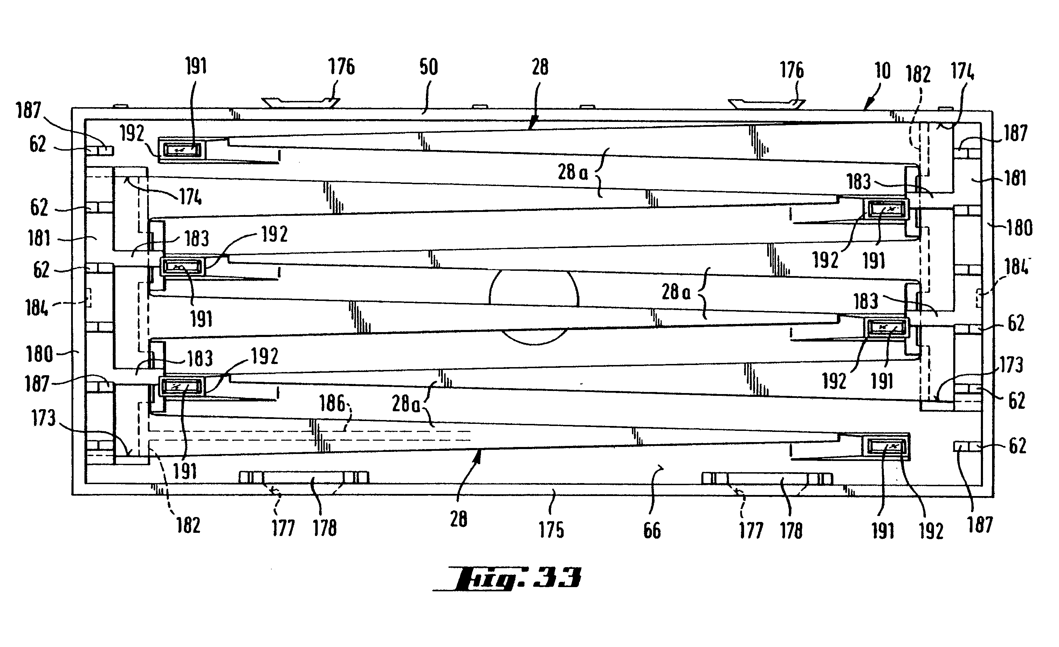

Bei der in diesen Figuren dargestellten Ausführungsform sind im übrigen sieben Niederhalter 32, 34, 36 vorgesehen, wobei die wannenförmige Eintiefung 48 des Disc-Halters 14 im Bereich der Hälfte, die der Gehäuserückwand 66 zugekehrt ist, kugelschalenförmig ist, an welchen Abschnitt bis zum Filmgelenk 38 ein zylindrischer Abschnitt folgt, so daß in diesem Bereich in der vorderen Hälfte der wannenförmigen Eintiefung 48 bis zum Filmgelenk 38 in Ausschubrichtung eine gleichbleibende Tiefe vorhanden ist. Im Bereich der Frontwandbaugruppe 40 ist die wannenförmige Eintiefung 48 wieder kugelschalenförmig. Im Bereich des Filmgelenks 38 ist der hiervon gebildete Schlitz von der Mitte aus nach außen sich verbreiternd ausgebildet, um zu vermeiden, daß infolge der Klappbewegung der Frontwandbaugruppe 40 Kollisionen mit der Disc 30 auftreten. In Ausschubrichtung können auf der Eintiefung 48 schmale und sehr niedrige, etwa 0,1 mm hohe Rippen 205 mit Abstand zueinander angeordnet sein, die insbesondere zweckmäßig sind, wenn die Eintiefung 48 im wesentlichen plan ist. An der Abdeckung 202 können Nocken 206 unterseitig angebracht sein, die mit den vordersten Niederhaltern 32 fluchten, so daß die Disc 30 beim Einschieben nicht stirnseitig an den vordersten Niederhalter 32 anstehen kann. Zur Montage Kann das Gehäuse 10 mit entsprechenden Montageöffnungen 207 versehen sein, vgl. Fig. 34.

Wie sich aus Fig. 42 ergibt, kann die Blattfeder 44 von unten eingelegt sein, wobei die Blattfeder 44 um eine Nase 208 als Widerlager gedrückt und hinter einer weiteren Nase 209 aufgrund des Federweges eingeschnappt ist. Benachbart zum Filmgelenk 38 ist eine Federauflage 210 für beide Stellungen der Frontwandbaugruppe 40 vorgesehen. Infolgedessen, daß sich der Winkel der Blattfeder 44 zur Frontwandbaugruppe 40 von einer Endstellung der Frontwandbaugruppe 40 zur anderen nur wenig ändert, ergibt sich ein angenehmes Schwenkverhalten.

Wie sich weiter aus Fig. 42 ergibt, kann die Nut 68 im Bereich des plattenförmiges Hauptteils 24 teilweise verbreitert sein. Die Abdeckung 202 kann Ober- und unterseitig über ihre Breite nach "dem" Nut/Feder-Prinzip mit der Frontwandbaugruppe 40 zusätzlich verbunden sein.

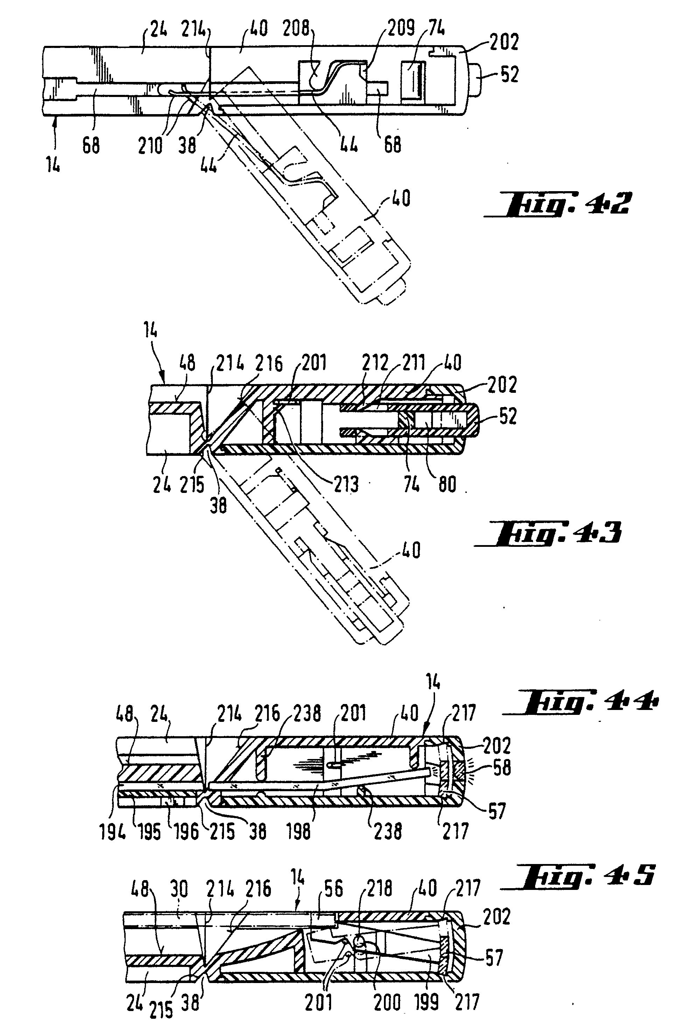

Gemäß Fig. 43 ist die Taste 52 im Schnitt U-förmig und besitzt benachbart zu den freien Enden ihrer Schenkel Ausnehmungen 211, in die Anschläge 212 für die Taste 52 ragen, die zur Frontseite hin abgeschrägt sind, so daß die Taste 52 zwecks Montage von vorne einschiebbar ist, wobei ihre Schenkel auf die schrägen Anschläge 212 auflaufen, zusammengedrückt, an den Anschlägen 212 vorbeigeführt werden und hinter diesen einrasten. Außerdem ist in dieser Figur eine Halterung 213 (Nasen) für die Drahtfeder 201 erkennbar. Auf beiden Seiten des Disc-Halters 14 befinden sich obere Anschläge 214, während sich ein unterer Anschlag 215 über die gesamte Breite des Disc-Halters 14 erstreckt. Benachbart zu der Eintiefung 48 im Bereich der Frontwandbaugruppe 40 am Filmgelenk 38 sind sich bis zur Maximalbreite der Eintiefung 48 erstreckende Abschrägungen 216 vorgesehen, so daß bei abgeklappter Frontwandbaugruppe 40 beim Herausziehen oder Einschieben der Disc 30 diese nicht verkratzt wird.

Wie aus Fig. 44 ersichtlich, wird der Lichtleiter 198 in der Frontwandbaugruppe 40 durch Rippen 238 der Frontwandbaugruppe 40 bzw. der Abdeckung 202 abgestützt. Für die Signalflagge 57 sind ein oberer und ein unterer Anschlag 217 in der Abdeckung 202 für die beiden vorgesehenen Anzeigepositionen angeordnet. Das Lager 200 ist so gestaltet, daß nach halbem Weg des Tasters 56 die Signalflagge 57 bereits mit dem entsprechenden Anschlag 217 in Eingriff steht, wodurch die Bolzen 218 des Schwenkarms 199 aus den Lagerpfannen gedrückt werden, so daß die zweite Hälfte des Tasterweges Toleranzfeld ist. In der Leerstellung hält die Drahtfeder 201 die Signalflagge 57 in den Lagerpfannen.

Fig. 46 und 47 zeigen eine Ausführungsform für eine Rastanordnung zwischen plattenförmigem Hauptteil 24 und abklappbarer Frontwandbaugruppe 40, bei der diese beiden Teile über das Filmgelenk 38 verbunden sind und das Hauptteil 24 an beiden Seiten jeweils in einer Ausnehmung 219 einen im Schnitt etwa dreieckigen Nocken 220 aufweist, wobei die abgerundete Spitze des Dreiecks zur Frontwandbaugruppe 40 zeigt. Die Frontwandbaugruppe 40 ihrerseits besitzt einen mit dem Nocken 220 in Eingriff stehenden Fortsatz 221, der eine Anlagefläche 222 aufweist, die bei Ausrichtung der Teile 24, 40 mit der unteren zugekehrten Nockenfläche in Eingriff steht. Zum Abklappen rutscht der Fortsatz 221 mit seiner abgerundeten Unterkante über die Abrundung des Nockens 220, so daß die Unterseite des Fortsatzes 221 auf der oberen zugekehrten Nockenfläche liegt. Der Nocken 220 besitzt an seinem angelenkten Ende eine Einschnürung 223, damit er beim Verschwenken der Frontwandbaugruppe 40 gegenüber dem Fortsatz 221 ausweichen kann.

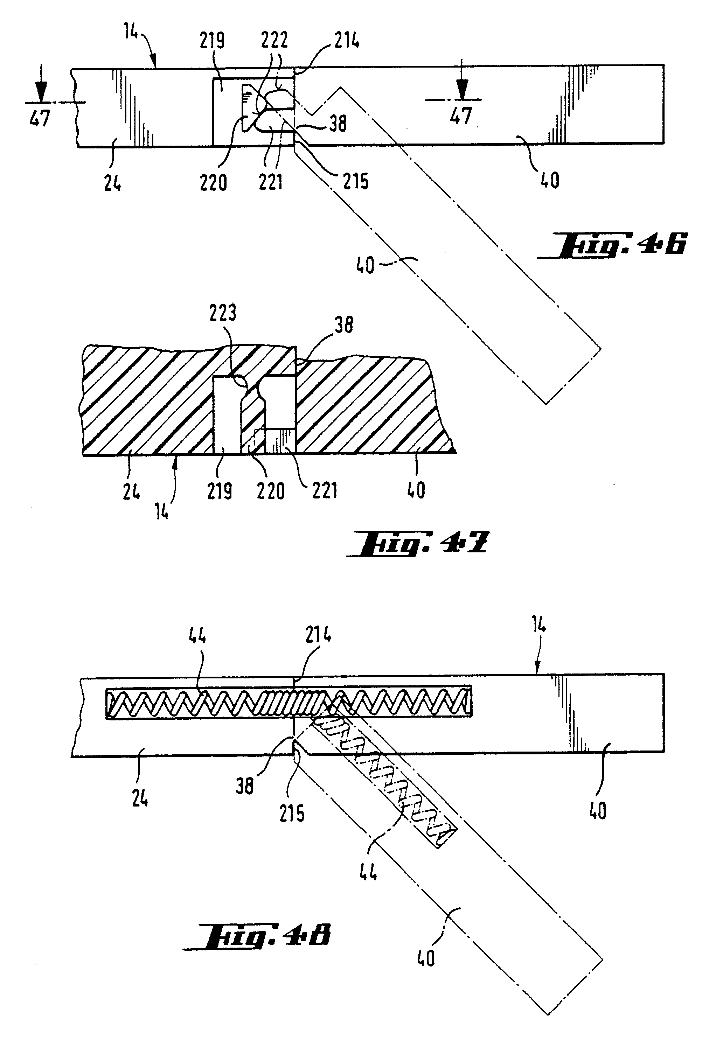

Bei der in Fig. 48 dargestellten Ausführungsform ist im Bereich des Filmgelenks 38 eine Feder 44 vorgesehen, die als Schraubenfeder ausgebildet und im mittleren Bereich, in dem sie abgeknickt wird, aneinanderliegende Windungen aufweist, die zur Vermeidung von Kratzgeräuschen und eines Einklemmens dienen.

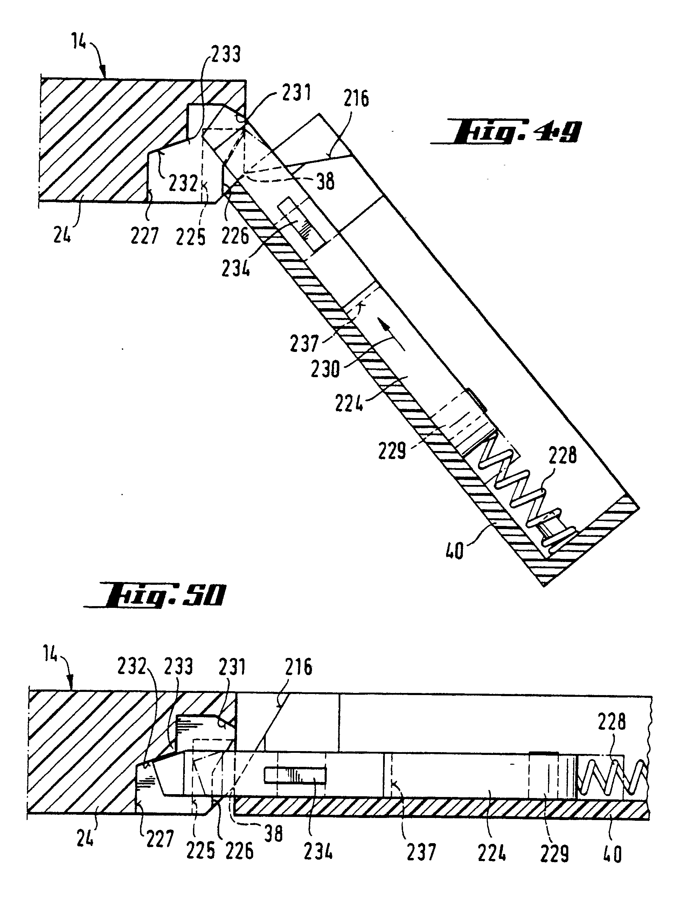

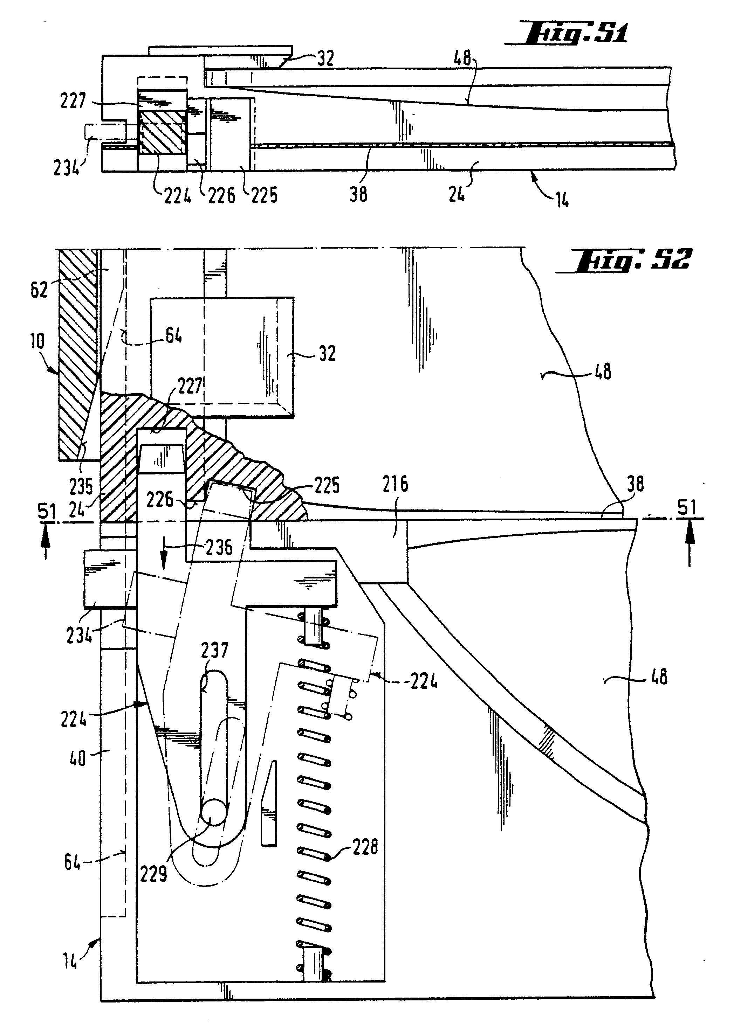

Wenn, wie etwa in Fig. 42 dargestellt, durch die Betätigung der Taste 52 der Disc-Halter 14 aus dem Gehäuse 10 ausfährt, schwenkt die am Hauptteil 24 angelenkte Frontwandbaugruppe 40 durch die Einwirkung der Feder 44 weg, damit der Zugriff zur Disc 30 ermöglicht wird. Gemäß den Fig. 49 bis 52 ist vorgesehen, daß ein Riegel 224 vorgesehen ist, dessen inaktive Stellung in den Fig. 49, 50 und 52 strichpunktiert dargestellt ist. Der für die Steuerung der Bewegung der Frontwandbaugruppe 40 verantwortliche Riegel 224 befindet sich in einer Vertiefung 225 im Hauptteil 24, wo er keinen Angriffspunkt findet, so daß er ungehindert wegschwenken kann. Am Ende der Schwenkbewegung (Fig. 49) springt der Riegel 224 infolge einer Freistellung 226, welche die Vertiefung 226 mit einer Vertiefung 227 im Hauptteil 24 verbindet, und durch die Einwirkung einer exzentrisch angeordneten Feder 228, hier einer Schraubenfeder, welche den Riegel 224 um einen Lagerzapfen 229 wegdreht, in die Vertiefung 227 und nimmt dort unter anschließender Bewegung in Richtung des Pfeils 230 die in Fig. 49 dargestellte Stellung ein. In dieser Position bildet der Riegel 224 einen Anschlag und sichert die Frontwandbaugruppe 40 vor einem Überdrehen in eine steilere als konstruktiv beabsichtigte Auslenkung, da er an der Fläche 231 der Vertiefung 227 ansteht.

Wenn der Disc-Halter 14 in das Gehäuse 10 zurückgeschoben werden soll, so muß zunächst die Frontwandbaugruppe 40 wieder hochgeklappt werden. Der Riegel 224 schwenkt damit in die in Fig. 50 gezeigte Stellung, wo er sich an die Fläche 232 der Vertiefung 227 anstellt (nachdem er die Eckpartie 233 zwischen beiden Flächen 231, 232 der Vertiefung 227 passiert hat) und damit die Frontwandbaugruppe 40 gegen ein erneutes Wegschwenken blockiert, weil die Kraft der Verriegelung größer als die Kraft der Feder 44 ist. Die Frontwandbaugruppe 40 bleibt daher in der für den Einschub nötigen Stellung stehen, selbst wenn der Benutzer zwischenzeitlich die Finger vom Disc-Halter 14 nimmt.

Es Kann passieren, daß jemand zu früh oder unbeabsichtigt die Frontwandbaugruppe 40 in diese Position gebracht hat. Daher ist es sinnvoll, wenn sich - bei entsprechendem Druck auf die Frontwandbaugruppe 40 - die Verriegelung wieder lösen läßt. Durch eine schräge Ausformung der Fläche 232 ist dies möglich, da die sich ergebende Kraftkomponente den Riegel 224 zurückstößt und Frontwandbaugruppe 40 und Riegel 224 erneut in die in Fig. 49 dargestellte Stellung gezwungen werden. Daß die Frontwandbaugruppe 40 wieder in Ausfluchtung mit dem Hauptteil 24 zurückgeschwenkt werden und sich dieser Vorgang beliebig wiederholen kann, ist ersichtlich.

Beim Einschub des Disc-Halters 14 passiert ein Lappen 234 des Riegels 224 eine Schräge 235 am Gehäuse 10 und an den Führungsstegen 62. Durch die sich ergebende Kraftkomponente wird der Riegel 224 in seine inaktive Stellung zurückbefördert, wobei er zunächst in Richtung des Pfeils 236 aus der Vertiefung 227 herausgestoßen wird. Durch die Lagerung des Zapfens 229 in einem Schlitz 237 ist sowohl eine lineare als auch eine Drehbewegung des Riegels 224 möglich.

**Ansprüche**

1. Behälter zum Aufbewahren von Compactdisks (30) oder anderen flachen Aufzeichnungsträgern mit einem an einer Seite offenen Gehäuse (10) und im Gehäuse beweglich geführten Transportschiebern (14 in Fig. 46) zur Aufnahme je eines Aufzeichnungsträgers sowie mit Auswerffedern (28), die die Schieber nach manueller Freigabe in eine für die Entnahme des Aufzeichnungsträgers bestimmte Entnahmeposition fördern, wobei jeder Schieber eine Frontplatte (40 in Fig. 46, 42) aufweist, die bei eingeschobenem Schieber die Gehäuseöffnung verschließt, mit dem Schieber schwenkbeweglich verbunden und in der Entnahmeposition des Schiebers manuell in eine Lage verschwenkbar und in dieser automatisch einrastbar ist, die das Entnehmen des Aufzeichnungsträgers in Ausschubrichtung des Schiebers ermöglicht.

2. Behälter nach Anspruch 1, dadurch gekennzeichnet, daß die Frontplatte (40 in Fig. 46) manuell ausrastbar ist.

3. Behälter nach Anspruch 1 oder 2, dadurch gekennzeichnet, daß die Frontplatte (40 in Fig. 46) auch in ihrer die Gehäuseöffnung verschließenden Schwenklage bezüglich des Schiebers (14 in Fig. 46) eine Rastposition aufweist.

4. Behälter nach Anspruch 3, dadurch gekennzeichnet, daß die Frontplatte (40 in Fig. 46) aus der Rastposition manuell lösbar ist.

5. Behälter nach Anspruch 3 oder 4, dadurch gekennzeichnet, daß die Frontplatte (40 in Fig. 46) von einer Federanordnung (220 in Fig. 46) in ihre beiden Rastpositionen vorgespannt ist.

6. Behälter nach einem der Ansprüche 1 bis 5, dadurch gekennzeichnet, daß die Frontplatte (40 in Fig. 46) durch Ausüben eines Drehmoments von einer Endlage in die andere verschwenkbar ist.

7. Behälter zum Aufbewahren von Compactdisks (30 in Fig. 28) oder anderen flachen Aufzeichnungsträgern mit einem an einer Seite offenen Gehäuse (10 in Fig. 28) und im Gehäuse beweglich geführten Transportschiebern (14 in Fig. 28) zur Aufnahme je eines Aufzeichnungsträgers sowie mit Auswerffedern (28 in Fig. 28), die die Schieber nach manueller Freigabe in eine für die Entnahme des Aufzeichnungsträgers bestimmte Entnahmeposition fördern, wobei jeder Schieber eine Frontplatte (40, 42 in Fig. 28) aufweist, die bei eingeschobenem Schieber die Gehäuseöffnung verschließt, mit dem Schieber schwenkbeweglich verbunden und mit diesem mittels einer Übertotpunkt-Feder (130 in Fig. 28) gekoppelt ist, die die Frontwand entweder in ihre die Gehäuseöffnung verschließende Position oder, in der Entnahmeposition des Schiebers, in eine weggeschwenkte Position vorspannt, die das Entnehmen des Aufzeichnungsträgers in Ausschubrichtung des Schiebers ermöglicht.

8. Behälter nach Anspruch 7, dadurch gekennzeichnet, daß die Endpositionen der Frontwand (40, 42 in Fig. 28) durch Anschläge (222 in Fig. 46) definiert sind.

9. Behälter nach Anspruch 7 oder 8, dadurch gekennzeichnet, daß die Frontwand (40 in Fig. 46) manuell zwischen ihren Endpositionen verlagerbar ist.

10. Behälter nach Anspruch 7 oder 8, gekennzeichnet durch Mittel (132, 134 in Fig. 28) zum automatischen Verschwenken der Frontwand (40, 42 in Fig. 28) über den Totpunkt der Feder (130 in Fig. 28) in die weggeschwenkte Position beim Ausschub des Schiebers (14 in Fig. 28) aus dem Gehäuse (10 in Fig. 28).

11. Behälter zum Aufbewahren von Compactdisks (30 in Fig. 29) oder anderen flachen Aufzeichnungsträgern mit einem an einer Seite offenen Gehäuse (10 in Fig. 29) und im Gehäuse beweglich geführten Transportschiebern (14 in Fig. 29) zur Aufnahme je eines Aufzeichnungsträgers sowie mit Auswerffedern (28 in Fig. 29), die die Schieber nach manueller Freigabe in eine für die Entnahme des Aufzeichnungsträgers bestimmte Entnahmeposition fördern, wobei jeder Schieber eine Frontplatte (40, 42 in Fig. 29) aufweist, die bei eingeschobenem Schieber die Gehäuseöffnung verschließt, mit dem Schieber schwenkbeweglich verbunden und in der Entnahmeposition des Schiebers in eine Lage verschwenkt ist, die das Entnehmen des Aufzeichnungsträgers in Ausschubrichtung des Schiebers ermöglicht und aus der sie manuell in ihre die Gehäuseöffnung verschließende Lage rückschwenkbar und, noch in der Entnahmeposition des Schiebers, in dieser Lage einrastbar ist.

12. Behälter nach Anspruch 11, dadurch gekennzeichnet, daß die Frontplatte (40 in Fig. 49) aus der Einrastlage manuell lösbar ist.

13. Behälter nach Anspruch 12 oder 13, dadurch gekennzeichnet, daß die Frontplatte (40 in Fig. 49) aus der Einrastlage durch Ausüben eines Drehmoments lösbar ist.

14. Behälter nach einem der vorangehenden Ansprüche mit Mitteln (112 in Fig. 27) zum Blokkieren des Schiebereinschubs bei weggeschwenkter Frontplatte (40 in Fig. 27).

15. Behälter nach Anspruch 14, dadurch gekennzeichnet, daß die Blockiermittel mindestens einen an der Frontplatte (40 in Fig. 27) vorgesehenen Anschlag (112 in Fig. 27) umfassen.

16. Behälter nach Anspruch 14 oder 15, soweit auf einen der Ansprüche 7 bis 13 rückbezogen, dadurch gekennzeichnet, daß die Frontplatte (40 in Fig. 27) beim Ausschub des Schiebers (14 in Fig. 27) aus dem Gehäuse automatisch in ihre Verschwenklage verlagert wird.

17. Behälter nach Anspruch 16, gekennzeichnet durch eine Feder (130 in Fig. 28), die die Frontplatte (40 in Fig. 28) in ihre Verschwenklage vorspannt.

18. Behälter nach einem der vorangehenden Ansprüche, bei dem die Auswerffedern Blattfedern (28a in Fig. 33) sind, die einseitig im Gehäuse (10 in Fig. 33) befestigt sind und mit ihren freien Enden an einer rückseitigen Kante der Schieber (14 in Fig. 29) anliegen, wobei die Blattfedern mehrerer Schieber als einstükkiges kammförmiges Stanz- und Biegeteil (28 in Fig. 35) ausgebildet sind.

19. Behälter nach Anspruch 18, dadurch gekennzeichnet, daß allen Schiebern in einem gemeinsamen Gehäuse eine einzige gemeinsame Federanordnung zugeordnet ist.

20. Behälter nach Anspruch 18, dadurch gekennzeichnet, daß zwei Federanordnungen (28 in Fig. 37), deren freie Enden jeweils an jedem zweiten Schieber (14 in Fig. 37) anliegen, einander gegenüberliegend im Gehäuse (10 in Fig. 37) angeordnet sind.

21. Behälter nach Anspruch 20, dadurch gekennzeichnet, daß die Federanordnungen (28 in Fig. 37) gleich ausgebildet und spiegelsymmetrisch in das Gehäuse (10 in Fig. 37) eingesetzt sind, wobei ihre Lage bezüglich der Schieber (14 in Fig. 37) durch Anschläge (173 in Fig. 36) definiert ist.

22. Behälter nach einem der Ansprüche 18 bis 21, dadurch gekennzeichnet, daß jede Federanordnung (28 in Fig. 36) gegen Herausfallen aus dem Gehäuse (10 in Fig. 36) gesichert ist.

23. Behälter nach einem der Ansprüche 18 bis 22, dadurch gekennzeichnet, daß die Blattfedern (28a in Fig. 33) sich zu ihrem freien Ende hin verjüngen.

24. Behälter nach Anspruch 1, 7, 11 oder 14, dadurch gekennzeichnet, daß der Schieber und die Frontplatte (40) mittels eines Filmgelenks (38) verbunden und einstückig aus Kunststoff gespritzt sind.

25. Behälter nach Anspruch 24, soweit auf Anspruch 11 oder 14 rückbezogen, dadurch gekennzeichnet, daß im Bereich des Filmgelenks (38) eine Feder (44, 130) angeordnet ist, mittels der die Frontplatte (40) in ihre gegenüber dem Schieber (24) weggeschwenkte Position vorgespannt ist.

26. Behälter nach Anspruch 25, dadurch gekennzeichnet, daß die Feder (44) als Blattfeder ausgebildet ist.

27. Behälter nach Anspruch 26, dadurch gekennzeichnet, daß die Blattfeder (44) in Aufnahmeschlitze (46) des Schiebers (24) und der Frontplatte (40) eingelegt ist.

28. Behälter nach Anspruch 25, dadurch gekennzeichnet, daß die Feder (44) als Schraubenfeder ausgebildet ist und insbesondere im Bereich des Filmgelenks (38) aneinander anliegende Windungen aufweist.

29. Behälter nach anspruch 25, dadurch gekennzeichnet, daß die Feder (44) als Schenkelfeder ausgebildet ist.

30. Behälter nach einem der Ansprüche 11 oder 14, dadurch gekennzeichnet, daß der Behälter Anschläge (214, 215) zum Begrenzen des Schwenkwinkels der Frontplatte (40) aufweist.

31. Behälter nach Anspruch 30, dadurch gekennzeichnet, daß die Blattfeder (44) als ein Anschlag ausgebildet ist.

32. Behälter für Compactdisks nach einem der Ansprüche 1 bis 31, dadurch gekennzeichnet, daß jeder Schieber (14) Disk-Abstützflächen aufweist, die nur im Randbereich der Disk (30) mit dieser Kontakt haben.

33. Behälter nach Anspruch 32, dadurch gekennzeichnet, daß jeder Schieber (24) eine wannenartige Eintiefung (48) im Disk-Aufnahmebereich besitzt.

34. Behälter nach Anspruch 33, dadurch gekennzeichnet, daß sich die wannenartige Eintiefung (48) des Schiebers (24) in eine Frontbaugruppe (40) fortsetzt, die mit der Frontplatte versehen ist.

35. Behälter nach Anspruch 34, dadurch gekennzeichnet, daß die in Ausschubrichtung des Schiebers (14) hintere Hälfte der Eintiefung (48) kugelschalenförmig ist, an die sich ein zylindrischer Bereich bis zur Frontbaugruppe (40) anschließt.

36. Behälter nach Anspruch 35, dadurch gekennzeichnet, daß die Eintiefung (48) im Bereich der Frontbaugruppe (40) kugelschalenförmig ist.

37. Behälter nach Anspruch 35 oder 36, dadurch gekennzeichnet, daß im Bereich eines Filmgelenks (38) zwischen Schieber und Frontbaugruppe der zur Oberseite gerichtete Schlitz zwischen Schieber (24) und Frontbaugruppe (40) sich von der Mitte aus nach außen verbreiternd ausgebildet ist.

38. Behälter für Compactdisks nach einem der Ansprüche 1 bis 37, dadurch gekennzeichnet, daß jeder Schieber (14) im Disk-Aufnahmefach sich in Ausschubrichtung des Schiebers (14) erstreckende schmale, niedrige Rippen (205) aufweist.

39. Behälter für Compactdisks nach einem der Ansprüche 1 bis 38, dadurch gekennzeichnet, daß jeder Schieber (14) einen plattenförmigen, die lichte Weite des Gehäuses (10) überspannenden Hauptteil (24) aufweist.

40. Behälter nach Anspruch 39, dadurch gekennzeichnet, daß die Frontplatte (40) mit einem Bodenabschnitt versehen ist, der als frontseitige Verlängerung des Hauptteils (24) ausgebildet ist.

41. Behälter nach einem der Ansprüche 32 bis 37, dadurch gekennzeichnet, daß den Disk-Abstützflächen gegenüberliegende Behälterteile ebenfalls derart gestaltet sind, daß sie nur im Randbereich der Disk (30) mit dieser in Kontakt gelangen können.

42. Behälter nach Anspruch 41, dadurch gekennzeichnet, daß das Gehäuse (10) zwischen benachbarten Schiebern (14) Zwischenböden (12) aufweist, die auf ihrer den Disk-Abstützflächen zugekehrten Seite wannenförmig eingetieft sind.

43. Behälter nach Anspruch 41, dadurch gekennzeichnet, daß die Schieber (14) im Gehäuse (10) unmittelbar benachbart angeordnet sind und beidseitig eine wannenartige Eintiefung (48) aufweisen.

44. Behälter für Compactdisks nach einem der Ansprüche 1 bis 43, dadurch gekennzeichnet, daß jeder Schieber (14) eine eingelegte Disk (30) übergreifende Niederhalter (32, 34, 36) aufweist.

45. Behälter nach Anspruch 44, dadurch gekennzeichnet, daß die Niederhalter (32, 34, 36) Disk-Einführschrägen aufweisen.

46. Behälter nach Anspruch 44 oder 45, dadurch gekennzeichnet, daß an der Unterseite der Schieber (14) frontseitig Nocken (206) angebracht sind, die mit den vordersten Niederhaltern (32) kämmen.

47. Behälter für Compactdisks nach einem der Ansprüche 1 bis 46, dadurch gekennzeichnet, daß eine die Frontplatte aufweisende Frontbaugruppe (40) eine Anzeigeeinrichtung, mittels der bei eingeschobenem Schieber (14) erkennbar ist, ob dieser eine Disk (30) enthält, aufweist.

48. Behälter nach Anspruch 47, dadurch gekennzeichnet, daß die Anzeigeeinrichtung einen Taster (58, 116) umfaßt, der sich bei Verschwenken der Frontbaugruppe (40) in die Einschubposition des Schiebers (14) an die Fläche einer eingelegten Disk (30) unter Federvorspannung anlegt und dabei ein Anzeigeorgan (57) verlagert.

49. Behälter nach Anspruch 48, dadurch gekennzeichnet, daß der Taster (56, 116) schwenkbar ist.

50. Behälter nach Anspruch 49, dadurch gekennzeichnet, daß der Taster (116) und das Anzeigeorgan (57) als Arme eines zweiarmigen Hebels ausgebildet sind, der um eine Achse parallel zur Frontplatte (42) drehbar in der Frontbaugruppe (40) gelagert ist.

51. Behälter nach einem der Ansprüche 47 bis 50, dadurch gekennzeichnet, daß ein Anzeigeorgan (57) benachbart zu einem Fenster (58) in der Frontplatte angeordnet ist.

52. Behälter nach Anspruch 26 und 50, dadurch gekennzeichnet, daß der Taster (116) mit einer Verlängerung (114) der Blattfeder (44) im Bereich des Filmgelenks (38), die den Taster (116) vorspannt, in Eingriff steht.

53. Behälter nach einem der Ansprüche 48 bis 50, dadurch gekennzeichnet, daß jeder Schieber (14) eine Lichtleitereinrichtung, die an dem Anzeigeorgan (57) endet, aufweist, die mittels einer Lichtquelle (190) beleuchtet ist, während das Anzeigeorgan (57) mindestens einen transparenten Abschnitt aufweist.

54. Behälter nach Anspruch 53, dadurch gekennzeichnet, daß die Lichtquelle (190) auf der Rückseite des Behälters angeordnet ist, wobei Lichtleiter (191) spinnenförmig in Höhe der einzelnen Schieber (14) in das Gehäuse (10) geführt sind.

55. Behälter nach Anspruch 54, dadurch gekennzeichnet, daß jeder Schieber (14) einen sich von seiner Rückseite bis zum Anzeigeorgan (57) erstreckenden Lichtleiter (194, 198) aufweist, der rückseitig in einer Lichtschleuse (192, 197) benachbart zum entsprechenden Lichtleiter (191) mündet.

56. Behälter nach Anspruch 55, dadurch gekennzeichnet, daß der Lichtleiter (194) in einer Rinne (139) angeordnet und von einer Abdeckleiste (195) abgedeckt ist.

57. Behälter nach Anspruch 55 oder 56, dadurch gekennzeichnet, daß die Lichtschleuse einen Stutzen (192), in dem ein Lichtleiter (191) vor dem freien Ende des Stutzens (192) mündet, und eine Buchse (197) umfaßt, die über das freie Ende des Stutzens (192) führbar ist und in der der andere Lichtleiter (194) mündet.

58. Behälter nach einem der Ansprüche 1 bis 57, dadurch gekennzeichnet, daß jeder Schieber (14) in seiner Ausschubbewegung durch Anschläge (18) an ihm und Gegenanschläge (20) am Gehäuse (10) begrenzt ist.

59. Behälter nach Anspruch 58, dadurch gekennzeichnet, daß jeder Schieber (14) seitliche Fortsätze (18) aufweist, die in seitliche Schlitze (16) des Gehäuses (10) greifen, deren Ende als Anschlag (20) dient.

60. Behälter nach Anspruch 59, dadurch gekennzeichnet, daß die Fortsätze (18) der Schieber (14) nach innen ausfedernd an diese einstückig angeformt sind.

61. Behälter nach einem der Ansprüche 1 bis 60, dadurch gekennzeichnet, daß jeder Schieber (14) seitliche Führungselemente (68) aufweist, denen komplementäre Führungselemente (62) an den Innenseiten von Gehäuseseitenwandungen zugeordnet sind.

62. Behälter nach Anspruch 61, dadurch gekennzeichnet, daß jeder Schieber seitliche Nuten (68) aufweist, in die gehäuseseitige Stege (62) greifen.

63. Behälter nach einem der Ansprüche 1, 7, 11 oder 14, dadurch gekennzeichnet, daß die Auswerffeder eine Schenkelhalsfeder (28) umfaßt, deren Curl (102) und ein Schenkel (104) im Schieber (24) aufgenommen sind, während das freie Ende des anderen Schenkels (106) in eine zugeordnete, in der Hauptebene des Schiebers liegende Nut (94) in einer Gehäuserückwand (66) greift.

64. Behälter nach einem der Ansprüche 1 bis 63, gekennzeichnet durch eine Verriegelungsanordnung mit einer an dem Schieber (14) vorgesehenen, bei eingeschobenem Schieber (14) zugänglichen Taste (52), mittels der ein Haken (82, 90, 92) aus einer Falle (84) ausrastbar ist.

65. Behälter nach Anspruch 64, dadurch gekennzeichnet, daß die Taste (52) mit ihrem freien Ende vor die Behälterfrontebene ragt.

66. Behälter nach Anspruch 64 oder 65, dadurch gekennzeichnet, daß die Taste (52) einstückig an den Schieber (14) angeformt ist.

67. Behälter nach Anspruch 64 oder 65, dadurch gekennzeichnet, daß die Taste (52) in die Frontplatte (40) zur Betätigung des Hakens (82) gegenüber der Frontplatte eindrückbar eingesetzt ist.

68. Behälter nach Anspruch 64, dadurch gekennzeichnet, daß die Frontplatte (42), die Taste bildend, um ein Filmgelenk (38) gegen die Kraft der Auswerffeder (28) unter Ausrastung des Hakens (92) verschwenkbar ist.

69. Behälter nach einem der Ansprüche 64 bis 67, dadurch gekennzeichnet, daß die Falle (84) in einer Gehäuseseitenwand ausgebildet und die Taste (52) bzw. der zugehörige Haken in der vom Schieber (14) definierten Ebene bewegbar ist.

70. Behälter nach einem der Ansprüche 1 bis 67, dadurch gekennzeichnet, daß eine Verriegelungsanordnung einen quer zur Bewegungsrichtung des Schiebers (14) verlagerbaren Riegelschieber (74) umfaßt, der mittels einer in der Frontplatte (42) vorgesehenen Taste (52) aus einer Falle (84), die im Gehäuse (10) ausgebildet ist, ausrastbar ist.

71. Behälter nach Anspruch 70, dadurch gekennzeichnet, daß der Riegelschieber (74) in der Frontplatte (42), die hohl ausgebildet ist, geführt ist.

72. Behälter nach Anspruch 70 oder 71, dadurch gekennzeichnet, daß der Riegelschieber (74) oder die Taste (52) in die verriegelnde Position federvorgespannt ist.

73. Behälter nach Anspruch 72, dadurch gekennzeichnet, daß eine Vorspannfeder (201) sowohl für die Verriegelungsanordnung als auch für eine Anzeigeeinrichtung vorgesehen ist.

74. Behälter nach einem der Ansprüche 64 bis 73, dadurch gekennzeichnet, daß die Tasten (52) benachbarter Schieber (14) in einem gemeinsamen Gehäuse (10) zueinander versetzt im Bereich der Frontplatte (42) angeordnet sind.

75. Behälter nach Anspruch 74, dadurch gekennzeichnet, daß die Tasten (52) der Schieber (14) alternierend nahe den Enden der Frontplatten (42) angeordnet sind.

76. Behälter nach einem der Ansprüche 1 bis 75, dadurch gekennzeichnet, daß das Gehäuse (10) durch Zwischenböden (12) in Aufnahmefächer für je einen Schieber (14) unterteilt ist und die Frontplatte (42) jedes Schiebers (14) in dessen eingeschobener Position einen Zwischenboden (12) abdeckt.

77. Behälter nach Anspruch 76, dadurch gekennzeichnet, daß die frontseitigen Kanten der Zwischenböden (12) gegenüber den Gehäuseseitenwandungen zurückversetzt sind.

78. Behälter nach einem der Ansprüche 1 bis 77, dadurch gekennzeichnet, daß sich an einen eingelegten Aufzeichnungsträger anlegende, federnd auslenkbare Bremsorgane (108) vorgesehen sind.

79. Behälter nach Anspruch 78, dadurch gekennzeichnet, daß die Bremsorgane (108, 110) einstückig an den aus Kunststoff gespritzten Schieber (24) angeformt sind.

80. Behälter nach Anspruch 78 oder 79 für Compactdisks, dadurch gekennzeichnet, daß der Winkel, definiert durch den Mittelpunkt der Disk (30) und Berührungspunkte der Bremsorgane (108, 110), kleiner als 160° und größer als 90° ist, und daß die Bremsorgane an der frontplattennahen Hälfte der Disk angreifen.

81. Behälter nach Anspruch 80, dadurch gekennzeichnet, daß der Winkel etwa 140° beträgt.

82. Behälter nach Anspruch 11, dadurch gekennzeichnet, daß zwischen der Frontplatte (40), die durch eine Federanordnung (44) in die stabile Entnahmelage vorgespannt ist, und dem Schieber (24) eine bei Verschwenken der Frontplatte (40) in die stabile, mit dem Schieber (24) fluchtende Lage einrastende Verriegelungsanordnung vorgesehen ist, die beim Einschieben des Schiebers (14) innerhalb des Gehäuses (10) ausrastbar ist.

83. Behälter nach Anspruch 1 oder 7, dadurch gekennzeichnet, daß die Frontplatte (40) über elastische Zapfen (168) an dem Schieber (24) angelenkt ist und zwei benachbarte, in einem Winkel zueinander angeordnete, dem Schieber (24) zugekehrte Stirnflächen (164, 166) aufweist, von denen jeweils eine in jeder der beiden stabilen Lagen mit einer Stirnfläche (160) des Schiebers (24) in Eingriff steht.

84. Behälter nach Anspruch 1 oder 7, dadurch gekennzeichnet, daß beidseitig am Schieber (24) ein Nocken (220) quer zur Ausschubrichtung vorgesehen ist, dessen freies Ende elastisch ausweichbar angeordnet ist, mit einem Fortsatz (221) der Frontplatte (40) in Eingriff steht und zwei benachbarte in einem Winkel zueinander angeordnete Anlageflächen hierfür aufweist.

**85.** Behälter nach Anspruch 1, dadurch gekennzeichnet, daß ein mit einem Ende in dem Schieber (24) in zwei verschiedenen Stellungen verriegelbarer Riegel (224) in einer Frontbaugruppe (40) entsprechend beweglich und federvorgespannt vorgesehen ist, der durch die Einschubbewegung des Schiebers (14) in das Gehäuse (10) in die Verriegelungsstellung bringbar ist, in der er Schieber (24) und Frontbaugruppe (40) fluchtend verriegelt.

**86.** Behälter nach Anspruch 85, dadurch gekennzeichnet, daß der Riegel (224) in Ausschubrichtung längsverschieblich und um eine Achse senkrecht hierzu drehbar angeordnet ist.

**87.** Behälter nach Anspruch 86, dadurch gekennzeichnet, daß der Riegel (224) einen Vorsprung (234) aufweist, der auf eine gehäuseseitige Schräge (235) auflaufend ausgebildet ist.

**88.** Behälter nach einem der Ansprüche 85 bis 87, dadurch gekennzeichnet, daß der Schieber (24) zwei nebeneinander befindliche und miteinander verbundene Verriegelungsausnehmungen (225, 227) in unterschiedlicher Höhe aufweist.

**89.** Behälter nach Anspruch 88, dadurch gekennzeichnet, daß das freie Ende des Riegels (224) im Bereich des Schiebers 824) oberseitig abgeschrägt ist, wobei die Verriegelungsausnehmungen (225, 227) korrespondierende Flächen (231, 233) aufweisen.

**90.** Behälter nach einem der Ansprüche 1 bis 89, dadurch gekennzeichnet, daß die Frontplatte (40) mit einer aufsteckbaren, frontseitigen Abdeckung (202) versehen ist, die Einrichtungen in der Frontplatte (40) nach außen abdeckt.

**91.** Behälter nach Anspruch 50, dadurch gekennzeichnet, daß der Hebel (199) mit seiner Drehachse (218) in einem Lager (200) mit offenen Lagerschalen gelagert und in diese federvorgespannt ist, während für das Anzeigeorgan (57) ein bei Betätigung des Tasters (58) erreichbarer Anschlag (217) vorgesehen ist, der bereits nach einer Teilauslenkung des Hebels (199) erreicht wird.

**92.** Behälter nach einem der Ansprüche 1 bis 91, dadurch gekennzeichnet, daß der Schieber (24) und die zugehörige für Einbauteile vorbereitete Frontplatte (40) spiegelsymmetrisch zur vertikalen Mittelebene in Ausschubrichtung ausgebildet sind, so daß die Einbauteile spiegelbildlich verwendbar sind.

**93.** Behälter nach Anspruch 92, dadurch gekennzeichnet, daß eine Verriegelungs-und eine Anzeigeeinrichtung, eine Einrichtung zum Halten der Frontplatte (40) in zwei stabilen Lagen sowie eine Entriegelungstaste (52) spiegelbildlich verwendbar sind.

**94.** Behälter nach einem der vorangehenden Ansprüche, dadurch gekennzeichnet, daß in der Frontplatte (40 in Fig. 26) ein federvorgespanntes Tastorgan (116 in Fig. 26) gelagert ist, mittels dem Präsenz bzw. Absenz eines Aufzeichnungsträgers (30 in Fig. 26) bei eingeschobenem Schieber feststellbar ist und das in Wirkverbindung mit einem Anzeigeorgan (124 in Fig. 26) steht, das die jeweils eingenommene Lage des Tastorgans optisch kenntlich macht.

## Claims

**1.** A container for storing compact discs (30) or other flat recording media, with a housing (10) open on one side and transport slider members (14 in Fig. 46) movably guided in the housing, the slider members receiving one recording medium (30) each, and also ejector springs (28) which convey the slider members after manual release into a removal position intended for the removal of the recording medium, each slider member comprising a front plate (40 in Fig. 46, 42) which closes the housing opening when the slider member is in its pushed-in position, which front plate pivotally connected to the slider member and in the removal position of the slider member is manually pivotable into a position, and is arranged to be automatically locked in this position, in which removal of the recording medium is possible in the direction in which the slider member is pushed out.

**2.** A container according to claim 1, characterized in that the front plate (40 in Fig. 46) is arranged to be manually unlocked.

**3.** A container according to claim 1 or 2, characterized in that the front plate (40 in Fig. 46) has a locking position also in the pivoted position relative to the slider member (14 in Fig. 46) in which it closes the housing opening.

**4.** A container according to claim 3, characterized in that the front plate (40 in Fig. 46) is manually releasable from the locking position.

**5.** A container according to claim 3 or 4, characterized in that the front plate (40 in Fig. 46) is biased by a spring assembly (220 in Fig. 46) into its two locking positions.

6. A container according to one of claims 1 to 5, characterized in that the front plate (40 in Fig. 46) is pivotable from one end position into the other by exertion of a turning moment.

7. A container for storing compact discs (30 in Fig. 28) or other flat recording media, with a housing (10 in Fig. 28) open on one side and transport slider members (14 in Fig. 28) movably guided in the housing, the slider members receiving one recording medium each, and also ejector springs (28 in Fig. 28) which convey the slider members after manual release into a removal position intended for the removal of the recording medium, each slider member comprising a front plate (40, 42 in Fig. 28) which closes the housing opening when the slider member is in its pushed-in position, which is pivotally connected to the slider member and is coupled to it by means of an over-centre spring (130 in Fig. 28) which biases the front wall either into the position in which it closes the housing opening or, in the removal position of the slider member, into a pivoted-away position which allows the removal of the recording medium in the direction in which the slider member is pushed out.

8. A container according to claim 7, characterized in that the end positions of the front wall (40, 42 in Fig. 28) are defined by stops (222 in Fig. 46).

9. A container according to claim 7 or 8, characterized in that the front wall (40 in Fig. 46) is manually displaceable between its end positions.

10. A container according to claim 7 or 8, characterized by means (132, 134 in Fig. 28) for automatically pivoting the front wall (40, 42 in Fig. 28) beyond the dead centre of the spring (130 in Fig. 28) into the pivoted-away position as the slider member (14 in Fig. 28) is pushed out of the housing (10 in Fig. 28).

11. A container for storing compact discs (30 in Fig. 29) or other flat recording media, with a housing (10 in Fig. 29) open on one side and transport slider members (14 in Fig. 29) movably guided in the housing, the slider members receiving one recording medium each, and also ejector springs (28 in Fig. 29) which convey the slider members after manual release into a removal position intended for the removal of the recording medium, each slider member comprising a front plate (40, 42 in Fig. 29) which closes the housing opening when the slider member is in its pushed-in position, which is pivotally connected to the slider member and in the removal position of the slider member is pivoted into a position which allows the removal of the recording medium in the direction in which the slider member is pushed out and from which it is pivotable manually back into is position closing the housing opening and, still in the removal position of the slider member, is lockable in this position.

12. A container according to claim 11, characterized in that the front plate (40 in Fig. 49) is manually releasable from the locked position.

13. A container according to claim 12 or 13, characterized in that the front plate (40 in Fig. 49) is releasable from the locked position by exertion of a turning moment.

14. A container according to one of the preceding claims, with means (112 in Fig. 27) for blocking the slider member insertion when the front plate (40 in Fig. 27) is pivoted away.

15. A container according to claim 14, characterized in that the blocking means comprise at least one stop (112 in Fig. 27) provided on the front plate (40 in Fig. 27).

16. A container according to claim 14 or 15, when dependent on one of claims 7 to 13, characterized in that the front plate (40 in Fig. 27) is displaced automatically into its pivoted position as the slider member (14 in Fig. 27) is pushed out of the housing.

17. A container according to claim 16, characterized by a spring (130 in Fig. 28) which biases the front plate (40 in Fig. 28) into its pivoted position.

18. A container according to one of the preceding claims, in which the ejector springs comprise leaf springs (28a in Fig. 33) which are fixed in the housing (10 in Fig. 33) on one side and rest with their free ends against a rear edge (26) of the slider members (14 in Fig. 29), the leaf springs of several slider members being constructed as a one-piece, comb-like stamped and bent component (28 in Fig. 33).

19. A container according to claim 18, characterized in that a single common spring assembly is associated with all slider members in a common housing.

20. A container according to claim 18, characterized in that two spring assemblies (28 in Fig. 37), the free ends of which rest in each case against every second slider member (14 in Fig. 37) are arranged opposite each other in the housing (10 in Fig. 37).

21. A container according to claim 20, characterized in that the leaf assemblies (28 in Fig. 37) are of identical construction and are inserted mirror-symmetrically in the housing (10 in Fig. 37), their position being defined by means of stops (173 in Fig. 36) with respect to the slider members (14 in Fig. 37).

22. A container according to one of claims 18 to 21, characterized in that each spring assembly (28 in Fig. 36) is secured against falling out of the housing (10 in Fig. 36).

23. A container according to one of claims 18 to 22, characterized in that the leaf springs (28a in Fig. 33) taper towards their free end.

24. A container according to claim 1, 7, 11 or 14, characterized in that the slider member and the front plate (40) are connected by means of an integral hinge (38) and are injection-moulded in one piece from plastics material.

25. A container according to claim 24, when dependent on claim 11 or 14, characterized in that in the region of the integral hinge (38) a spring (44, 130) is arranged by means of which the front plate (40) is biased into a position in which it is pivoted away with respect to the slider member (24).

26. A container according to claim 25, characterized in that the spring (44) is in the form of a leaf spring.

27. A container according to claim 26, characterized in that the leaf spring (44) is inserted into receiving slots (46) in the slider member (24) and in the front plate (40).

28. A container according to claim 25, characterized in that the spring (44) is in the form of a helical spring and has coils which lie close to one another in particular in the region of the integral hinge (38).

29. A container according to claim 25, characterized in that the spring (44) is in the form of a spring with projecting legs.

30. A container according to one of claims 11 or 14, characterized in that the container has stops (214, 215) to limit the pivoting angle of the front plate (40).

31. A container according to claim 30, characterized in that the leaf spring (44) is in the form of a stop.

32. A container for compact discs according to one of claims 1 to 31, characterized in that each slider member (14) has disc-supporting surfaces which have contact with the disc (30) only in the edge region of the latter.

33. A container according to claim 32, characterized in that each slider member (24) has a basin-like depression (48) in the disc-receiving area.

34. A container according to claim 33, characterized in that the basin-like depression (48) of the slider member (24) continues in a front assembly (40) which is provided with the front plate.

35. A container according to claim 34, characterized in that the rear half of the depression (48), seen in the direction in which the slider member (14) is pushed out, is part spherical and has adjoining it a cylindrical region as far as the front assembly (40).

36. A container according to claim 35, characterized in that the depression (48) is part spherical in the region of the front assembly (40).

37. A container according to claim 35 or 36, characterized in that in the region of an integral hinge (38) between the slider member and the front assembly the slot between slider member (24) and front assembly (40) which points towards the upper side broadens out from the centre towards the middle.

38. A container for compact discs according to one of claims 1 to 37, characterized in that each slider member (14) has in the disc-receiving area narrow, low ribs (205) which extend in the direction in which the slider member (14) is pushed out.

39. A container for compact discs according to one of claims 1 to 38, characterized in that each slider member (14) has a platter-shaped main part (24) spanning the inside width of the housing (10).

40. A container according to claim 39, characterized in that the front plate (40) is provided with a floor section which is constructed as a front extension of the main part (24).

41. A container according to on of claims 32 to 37, characterized in that parts of the container situated opposite the disc-supporting surfaces are also constructed in such a way that they are in contact with the disc (30) only in the edge region of the latter.

42. A container according to claim 41, characterized in that, between adjacent slider members (14), the housing (10) has intermediate partitions (12) which have basin-like depressions on the side facing towards the disc-supporting surfaces.

43. A container according to claim 41, characterized in that the slider members (14) are arranged immediately adjacent in the housing (10) and have a basin-like depression (48) on both sides.

44. A container for compact discs according to one of claims 1 to 43, characterized in that each slider member (14) has holding-down members (32, 34, 36) which engage over an inserted disc (30).

45. A container according to claim 44, characterized in that the holding-down members (32, 34, 36) have bevels to facilitate the entry of a disc.

46. A container according to claim 44 or 45, characterized in that, mounted on the underside of the slider members (14), at the front there are projections (206) which mesh with the frontmost holding-down members (32).

47. A container for compact discs according to one of claims 1 to 46, characterized in that a front assembly (40) comprising the front plate has an indicating device by means of which, when the slider member (14) is pushed in, it is possible to see whether the slider member (14) contains a disc (30).

48. A container according to claim 47, characterized in that the indicating device comprises a feeler (58, 116) which, when the front assembly (40) is pivoted into the position in which the slider member (14) is pushed in, abuts against the surface of an inserted disc (30) as a result of spring bias and thereby displaces an indicating member (57).

49. A container according to claim 48, characterized in that the feeler (56, 116) is pivotable.

50. A container according to claim 49, characterized in that the feeler (116) and the indicating member (57) are constructed as arms of a two-armed lever, which is rotatably supported about an axis parallel to the front plate (42) in the front assembly (40).

51. A container according to one of claims 47 to 50, characterized in that an indicating member (57) is arranged adjacent to a window (58) in the front plate.

52. A container according to claim 26 and 50, characterized in that the feeler (116) is in engagement with an extension (114) of the leaf spring (44), in the region of the integral hinge (38) which biases the feeler (116).

53. A container according to one of claims 48 to 50, characterized in that each slider member (14) has a light-conducting means which terminates at the indicating member (57) and which can be lit up by means of a light source (190), while the indicating member (57) has at least one transparent section.

54. A container according to claim 53, characterized in that the light source (190) is arranged on the back of the container, light conductors (191) being led spider-like into the housing (10) on a level with the individual slider members (14).

55. A container according to claim 54, characterized in that each slider member (14) has a light conductor (194, 198) extending from its rear side as far as the indicating member (57) and opening at the back into a light trap (192, 197) adjacent to the corresponding light conductor (191).

56. A container according to claim 55, characterized in that the light conductor (194) is arranged in a channel (193) and is covered over by a cover strip (195).

57. A container according to claim 55 or 56, characterized in that the light trap comprises a connecting piece (192), into which a light conductor (191) opens in front of the free end of the connecting piece (192), and a bushing (197), which can be guided over the free end of the connecting piece (192) and in which the other light conductor (194) opens.

58. A container according to one of claims 1 to 57, characterized in that each slider member (14) is limited in its outward movement by means of stops (18) on the slider member and counter stops (20) on the housing (10).

59. A container according to claim 58, characterized in that each slider member (14) has lateral extensions (18) which engage lateral slots (16) in the housing (10), the end of which acts as a stop (20).

60. A container according to claim 59, characterized in that the extensions (18) of the slider members (14) are moulded on to the latter in one piece so that they are resiliently deformable inwards.

61. A container according to one of claims 1 to 60, characterized in that each slider member (14) has lateral guide members (68) with which complementary guide members (62) on the inside of the side walls of the housing are associated.

62. A container according to claim 61, characterized in that each slider member (14) has lateral grooves (68) on which ribs (62) in the housing engage.

63. A container according to one of claims 1, 7, 11 or 14, characterized in that the ejector spring comprises a coiled torsion spring with projecting legs (28), the coiled portion (102) and one leg (104) of which are housed in the slider member (14), while the free end of the other leg (106) engages in an associated groove (94) in a rear wall (66) of the housing lying in the principal plane of the slider member.

64. A container according to one of claims 1 to 63, characterized in that the locking arrangement comprises a button (52) which is accessible on the slider member (14) when the slider member (14) is pushed in, and by means of which a hook (82, 90, 92) can be disengaged from a catch (84).

65. A container according to claim 64, characterized in that the button (52) projects with its free end in front of the front plane of the container.

66. A container according to claim 64 or 65, characterized in that the button (52) is moulded in one piece with the slider member (14).

67. A container according to claim 64 or 65, characterized in that the button (52) is inserted into the front plate (40) so that it can be pressed in with respect to the front plate (40) in order to actuate the hook (82).

68. A container according to claim 64, characterized in that the front plate (42), forming the button, is pivotable about an integral hinge (38) against the force of the ejector spring (28) with the hook (92) being disengaged.

69. A container according to one of claims 64 to 67, characterized in that the catch (84) is formed in a side wall of the housing and the button (52) and/or the corresponding hook is movable in the plane defined by the slider member (14).

70. A container according to on of claims 1 to 67, characterized in that a locking arrangement comprises a detent slider (74) which is displaceable at right-angles to the direction of movement of the slider member (14) and which can be disengaged by means of a button (52) provided in the front plate (42) from a catch (84) which is formed in the housing (10).

71. A container according to claim 70, characterized in that the detent slider (74) is guided in the front plate (42) which is hollow in construction.

72. A container according to claim 70 or 71, characterized in that the detent slider (74) or the button (52) is spring biased into the locking position.

73. A container according to claim 72, characterized in that a bias spring (201) is provided both for the locking arrangement and for an indicating device.

74. A container according to on of claims 64 to 73, characterized in that the buttons (52) of adjacent slider members (14) in a common housing (10) are arranged so that they are staggered with respect to one another in the region of the front plate (42).

75. A container according to claim 74, characterized in that the buttons (52) of the slider members (14) are arranged alternately at the ends of the front plates (42).

76. A container according to one of claims 1 to 75, characterized in that the housing (10) is divided by means of intermediate partitions (12) into compartments to receive one slider member (14) each, and the front plate (42) of each slider member (14) covers over an intermediate partition (12) when the slider member is in its pushed-in position.

77. A container according to claim 76, characterized in that the front edges of the intermediate partitions (12) are set back in relation to the side walls of the housing.

78. A container according to one of claims 1 to 77, characterized in that resiliently deflectable members (108, 110) with a checking action are provided which come to rest against an inserted recording medium.

79. A container according to claim 78, characterized in that the checking-action members (108, 110) are moulded in one piece with the slider member (24) which is injection-moulded from plastics material.

80. A container according to claim 78 or 79 for compact discs, characterized in that the angle defined by the centre point of the disc (30) and the points of contact of the checking-action members (108, 110) is less than $160°$ and greater than $90°$, and the checking-action members act on the front plate half of the disc.

81. A container according to claim 80, characterized in that the angle is approximately $140°$.

82. A container according to claim 11, characterized in that, between the front plate (40) which is biased into a stable removal position by means of a spring arrangement (44), and the slider member (24), a locking arrangement is provided which engages when the front plate (40) is pivoted into the stable position aligned with the slider member (24), and which can be disengaged when the slider member (14) is pushed inside the housing (10).

83. A container according to claim 1 or 7, characterized in that the front plate (40) is linked to the slider member (24) by way of resilient pivot pins (168) and has two adjacent end faces (164, 166) arranged at an angle to each other facing towards the slider member (24), one of which is in engagement in each case with an end face (160) of the slider member (24) in each of the two stable positions.

84. A container according to claim 1 or 7, characterized in that on both sides of the slider member (24) a projection (220) is provided at right-angles to the direction of outward movement, the free end of which is arranged to be resiliently deflectable, is in engagement with an extension (221) of the front plate (40) and has for this purpose two adjacent bearing surfaces arranged at an angle to one another.

85. A container according to claim 1, characterized in that a detent (224) which can be locked with one end in the slider member (24) in two different positions is provided in a front assembly (40) so that it is correspondingly moveable and spring-biased, and can be brought by the movement which pushes the slider member (14) into the housing (10) into the locking position in which it locks the slider member (24) and the front assembly (40) in alignment with each other.

86. A container according to claim 85, characterized in that the detent (224) is arranged to be longitudinally movable in the direction of the outward movement and rotatable about an axis perpendicular thereto.

87. A container according to claim 86, characterized in that the detent (224) has a projection (234) which is constructed to run up on a bevel (235) on the housing.

88. A container according to one of claims 85 to 87, characterized in that the slider member (24) has two locking recesses (225, 227) situated adjacent to each other, at different heights, and connected with each other.

89. A container according to claim 88, characterized in that the free end of the detent (224) is bevelled at the top in the region of the slider member (24), and the locking recesses (225, 227) have corresponding surfaces (231, 233).

90. A container according to one of claims 1 to 89, characterized in that the front plate (40) has an attachable front cover (202) which covers over devices in the front plate (40) towards the outside.

91. A container according to claim 50, characterized in that the lever (199) is supported with its rotation axis (218) in a bearing (200) with open bearing shells and is spring-biased in the latter, while for the indicating member (57) a stop (217) which can be met on actuation of the feeler (58) is provided and this stop is met after only a partial deflection of the lever (199).

92. A container according to one of claims 1 to 91, characterized in that the slider member (24) and the accompanying front plate (40) prepared for inserted parts are constructed to be mirror-symmetrical with respect to the vertical central plane in the direction of the outward movement, so that inserted parts can be used mirror-inverted.

93. A container according to claim 92, characterized in that a locking arrangement and an indicating device, a means to hold the front plate (40) in two stable positions, and an unlocking button (52) can be used mirror-inverted.

94. A container according to one of the preceding claims, characterized in that in the front plate (40 in Fig. 46) there is mounted a spring-biased feeler (116 in Fig. 26) by means of which it is possible to ascertain the presence or absence of a recording medium (30 in Fig. 26) with the slider member is the pushed in position, and which is in operative connection with an indicating member (124 in Fig. 26) which renders the respective assumed position of the feeler visually recognisable.

**Revendications**

1.  Coffret destiné au stockage de disques compacts (30) ou d'autres supports d'enregistrement plats comportant un boîtier (10) ouvert sur un côté et des tiroirs de transport (14 à la Fig. 46) guidés de façon mobile dans le boîtier pour recevoir chacun un support d'enregistrement ainsi que des ressorts éjecteurs (28) qui amènent dans une position de prélèvement, destinée au prélèvement du support d'enregistrement, les tiroirs après une libération à la main, chaque tiroir présentant une plaque frontale (40 à la Fig. 46, 42) qui ferme l'orifice de boîtier lorsque le tiroir est rentré, est associée au mouvement de pivotement du tiroir et peut, quand le tiroir est en position de prélèvement, être pivotée à un emplacement permettant le prélèvement du support d'enregistrement dans la direction de sortie du tiroir et être automatiquement encliquetée à cet emplacement.

2.  coffret selon la revendication 1, caractérisé en ce que la plaque frontale (40 à la Fig. 46) peut être décliquetée manuellement.

3.  coffret selon la revendication 1 ou 2, caractérisé en ce que la plaque frontale (40 à la Fig. 46) comporte aussi, quand elle est à son emplacement de fermeture de l'orifice de boîtier, où elle est pivotée par rapport au tiroir (14 à la Fig. 46), une position d'encliquetage.

4.  Coffret selon la revendication 3, caractérisé en ce que la plaque frontale (40 à la Fig. 46) peut être libérée manuellement hors de la position encliquetée.

5.  Coffret selon la revendication 3 ou 4, caractérisé en ce que la plaque frontale (40 à la Fig. 46) est sollicitée par un dispositif élastique (220 à la Fig. 46) dans ses deux positions d'encliquetage.

6.  Coffret selon l'une des revendications 1 à 5, caractérisé en ce que la plaque frontale (40 à la Fig. 46) peut être pivotée depuis un emplacement d'extrémité vers l'autre par l'effet d'un couple de rotation.

7.  Coffret destiné au stockage de disques compacts (30) ou d'autres supports d'enregistrement plats comportant un boîtier (10 à la Fig. 28) ouvert sur un côté et des tiroirs de transport (14 à la Fig. 28) guidés de façon mobile dans le boîtier pour recevoir chacun un support d'enregistrement ainsi que des ressorts éjecteurs (28 à la Fig. 28) qui amènent dans une position de prélèvement, destinée au prélèvement du support d'enregistrement, les tiroirs après une libération à la main, chaque tiroir présentant une plaque frontale (40, 42 à la Fig. 28) qui ferme l'orifice de boîtier lorsque le tiroir est rentré, est associée au mouvement de pivotement du tiroir et est accouplée avec ce dernier au moyen d'un ressort de passage au-delà du point mort (130 à la Fig. 28) qui sollicite la paroi frontale, soit dans sa position de fermeture de l'orifice de boîtier, soit dans la position de prélèvement de tiroir, dans une position écartée après pivotement qui permet le prélèvement du support d'enregistrement dans la direction de sortie du tiroir.

8.  Coffret selon la revendication 7, caractérisé en ce que les positions finales de la paroi frontale (40, 42 à la Fig. 29) sont définies par des butées (222 à la Fig. 46).

9.  Coffret selon la revendication 7 ou 8, caractérisé en ce que la paroi frontale (40 à la Fig. 46) est mobile à la main entre ses deux positions finales.

10. Coffret selon la revendication 7 ou 8, caractérisé par des moyens (132, 134 à la Fig. 28) destinés à un pivotement automatique de la paroi frontale (40, 42 à la Fig. 28) au-delà du point mort du ressort (130 à la Fig. 28) vers la position écartée par pivotement lors de la sortie du tiroir (14 à la Fig. 28) hors du boîtier (10 à la Fig. 28).

11. Coffret destiné au stockage de disques compacts (30 à la Fig. 29) ou d'autres supports d'enregistrement plats comportant un boîtier (10 à la Fig. 29) ouvert sur un côté et des tiroirs de transport (14 à la Fig. 29) guidés de façon mobile dans le boîtier pour recevoir chacun un support d'enregistrement ainsi que des ressorts éjecteurs (28 à la Fig. 29) qui amènent dans une position de prélèvement, destinée au prélèvement du support d'enregistrement, les tiroirs après une libération à la main, chaque tiroir présentant une plaque frontale (40 à la Fig. 46, 42) qui ferme l'orifice de boîtier lorsque le tiroir est rentré, est associée au mouvement de pivotement du tiroir et est, quand le tiroir est en position de prélèvement, pivotée à un emplacement qui permet le prélèvement du support d'enregistrement dans la direction de sortie du tiroir et à partir duquel elle peut être pivotée à la main en retour vers son emplacement de fermeture de l'orifice de boîtier, et qui peut, en outre être encliquetée dans cet emplacement lorsque le tiroir est dans la position de prélèvement.

12. Coffret selon la revendication 11, caractérisé en ce que la plaque frontale (40 à la Fig. 49) peut être libérée à la main hors de son emplacement d'encliquetage.

13. Coffret selon la revendication 12 ou 13, caractérisé en ce que la plaque frontale (40 à la Fig. 49) peut être dégagée hors de l'emplacement d'encliquetage en exerçant un couple de rotation.

14. Coffret selon l'une des revendications précédentes comportant des moyens (112 à la Fig. 27) pour bloquer le coulissement d'entrée du tiroir lorsque la plaque frontale (40 à la Fig. 27) est écartée à pivotement.

15. Coffret selon la revendication 14, caractérisé en ce que les moyens de blocage comprennent au moins une butée (112 à la Fig. 27) prévue sur la plaque frontale (40 à la Fig. 27).

16. Coffret selon la revendication 14 ou 15, dans la mesure où elle dépend de l'une des revendications 7 à 13, caractérisé en ce que la plaque frontale (40 à la Fig. 27) est automatiquement déplacée vers son emplacement pivoté lors du coulissement du tiroir (14 à la Fig. 27) hors du boîtier.

17. Coffret selon la revendication 16, caractérisé par un ressort (130 à la Fig. 28) qui sollicite la plaque frontale (40 à la Fig. 28) vers son emplacement pivoté.

18. Coffret selon l'une des revendications précédentes, dans lequel les ressorts éjecteurs sont des ressorts à lame (28a à la Fig. 33) qui sont d'une part fixés sur le boîtier (10 à la Fig. 3) et qui reposent par leurs extrémités libres sur une arête du côté arrière des tiroirs (14 à la Fig. 29), les ressorts à lame de plusieurs tiroirs étant réalisés sous la forme d'une pièce estampée pliée d'un seul tenant, en forme de poigne.

19. Coffret selon la revendication 18, caractérisé en ce qu'un dispositif de ressort unique commun est associé à tous les tiroirs dans un boîtier commun.

20. Coffret selon la revendication 18, caractérisé en ce que deux agencements de ressorts (28 à la Fig. 37) dont les extrémités libres reposent respectivement sur un tiroir sur deux (14 à la Fig. 37) sont disposés face-à-face dans un boîtier (10 à la Fig. 37).

21. Coffret selon la revendication 20, caractérisé en ce que les agencements de ressorts (28 à la Fig. 37) sont de même structure et sont disposés en symétrie de miroir dans le boîtier (10 à la Fig. 37), leur emplacement vis-à-vis des tiroirs (14 à la Fig. 37) étant défini par des butées (113 à la Fig. 36).

22. Coffret selon l'une des revendications 18 à 21, caractérisé en ce que chaque agencement de ressort (29 à la Fig. 36) est garanti contre une chute hors du boîtier (10 à la Fig. 36).

23. Coffret selon l'une des revendications 18 à 22, caractérisé en ce que les ressorts à lame (28a à la Fig. 33) se rétrécissent vers leurs extrémités libres.

24. Coffret selon la revendication 1, 7, 11 ou 14, caractérisé en ce que le tiroir et la plaque frontale (40) sont reliés entre eux par une articulation en pellicule (38) et sont injectés, en matière plastique, d'un seul tenant.

25. Coffret selon la revendication 24, dans la mesure où elle se dépend de la revendication 11 ou 14, caractérisé en ce qu'un ressort (44 130), au moyen duquel la plaque frontale (40) est sollicitée au préalable dans sa position écartée à pivotement par rapport au tiroir (24), est disposé dans la zone de l'articulation en pellicule (30).

**26.** Coffret selon la revendication 25, caractérisé en ce que le ressort (44) consiste en un ressort à lame.

**27.** Coffret selon la revendication 26, caractérisé en ce que le ressort à lame (44) est monté dans des fentes réceptrices (46) du tiroir (24) et de la plaque frontale (40).

**28.** Coffret selon la revendication 25, caractérisé en ce que le ressort (44) est un ressort en hélice et présente, en particulier dans la zone de l'articulation en pellicule (38, des spires situées l'une contre l'autre.

**29.** Coffret selon la revendication 25, caractérisé en ce que le ressort (44) consiste en un ressort à branche.

**30.** Coffret selon l'une des revendications 11 à 14, caractérisé en ce que le coffret comprend des butées (214, 215) pour limiter l'angle de pivotement de la plaque frontale (40).

**31.** Coffret selon la revendication 30, caractérisé en ce que le ressort à lame (44) constitue une butée.

**32.** Coffret pour disques compacts selon l'une des revendications 1 à 31, caractérisé en ce que chaque tiroir (14) présente des surfaces d'appui de disques, qui ne sont en contact avec le disque (30) que dans sa zone de bord.

**33.** Coffret selon la revendication 32, caractérisé en ce que chaque tiroir (24) comporte, dans la zone de réception de disque, un creux (48) en forme de cuvette.

**34.** Coffret selon la revendication 33, caractérisé en ce que le creux (48), en forme de cuvette, du tiroir (24) se poursuit dans un élément de façade qui comporte la plaque frontale (40).

**35.** Coffret selon la revendication 34, caractérisé en ce que la moitié arrière, dans la direction de coulissement de sortie du tiroir (14), du creux (48) est en forme d'enveloppe sphérique à laquelle se raccorde une zone cylindrique jusqu'à l'élément de façade (40).

**36.** Coffret selon la revendication 35, caractérisé en ce que le creux (48) est en forme d'enveloppe sphérique dans la zone de l'élément de façade (40).

**37.** Coffret selon la revendication 35 ou 36, caractérisé en ce que, dans la zone d'une articulation en pellicule (38) entre tiroir et élément de façade, la fente dirigée vers la face supérieure entre tiroir et élément de façade est ménagée en s'élargissant à partir du milieu vers l'extérieur entre le tiroir (24) et l'élément de façade (40).

**38.** Coffret pour disques compacts selon l'une des revendications 1 à 37, caractérisé en ce que chaque tiroir (14) présente, dans la zone de réception de disque, de petites nervures basses (205) s'étendant dans la direction de coulissement de sortie du tiroir (14).

**39.** Coffret pour disques compacts selon l'une des revendications 1 à 38, caractérisé en ce que chaque tiroir (14) comporte une partie principale (24) en forme de plaque qui chevauche la largeur libre du boîtier (10).

**40.** Coffret selon la revendication 39, caractérisé en ce que la plaque frontale (40) comporte une partie de fond qui est réalisée sous la forme d'un prolongement de la partie principale (24) vers le côté frontal.

**41.** Coffret selon l'une des revendications 32 à 27, caractérisé en ce que des éléments de coffret situés face aux surfaces d'appui de disques de parties de boîtier opposées entre elles sont de même réalisées de telle manière qu'elles ne peuvent venir en contact avec le disque (30) que dans sa zone de bord.

**42.** Coffret selon la revendication 41, caractérisé en ce que le boîtier (10) comporte, entre deux tiroirs voisins (14), des étages intermédiaires (12) qui sont creusés en forme de cuvettes sur leur côté tourné vers les surfaces d'appui de disques.

**43.** Coffret selon la revendication 41, caractérisé en ce que les tiroirs (14) sont disposés au voisinage immédiat l'un de l'autre dans le boîtier (10) et présentent de chaque côté un creux (48) en forme de cuvette.

**44.** Coffret pour disques compacts selon l'une des revendications 1 à 43, caractérisé en ce que chaque tiroir (14) comporte un élément de maintien vers le bas (32, 34, 36) qui saisit par le dessus un disque (30) qui y est introduit.

**45.** Coffret selon la revendication 44, caractérisé en ce que le dispositif de maintien vers le bas (32, 34, 36) comporte des rampes d'introduction de disques.

**46.** Coffret selon la revendication 44 ou 45, caractérisé en ce que des encoches (206) de face avant sont prévues sur le côté inférieur des tiroirs (14) et se disposent en alternance, à la manière d'une peigne, avec les dispositifs (32) de maintien vers le bas les plus avancés.

**47.** Coffret pour disques compacts selon l'une des revendications 1 à 46, caractérisé en ce qu'un élément de façade (40) qui comporte la plaque frontale comprend un dispositif d'affichage au moyen duquel il est possible de savoir, lorsque le tiroir est rentré, s'il contient un disque (30).

**48.** Coffret selon la revendication 47, caractérisé en ce que le dispositif d'affichage comprend un palpeur (58, 116) qui s'appuie, sous une sollicitation élastique, sur la surface d'un disque introduit (30), lors du pivotement de l'élément de façade (40) dans la position de coulissement de rentrée du tiroir (14), et déplace ainsi un organe d'affichage (57).

**49.** Coffret selon la revendication 48, caractérisé en ce que le palpeur (56, 116) peut pivoter.

**50.** Coffret selon la revendication 49, caractérisé en ce que le palpeur (116) et l'organe d'affichage (57) sont réalisés sous forme de bras d'un levier à deux bras qui est logé dans l'élément de façade (40) en pouvant pivoter autour d'un axe parallèle à la plaque frontale (42).

**51.** Coffret selon l'une des revendications 47 à 50, caractérisé en ce qu'un organe d'affichage (57) est disposé au voisinage d'une fenêtre (58) de la plaque frontale.

**52.** Coffret selon la revendication 26 ou 50, caractérisé en ce que le palpeur (116) est en contact, dans la zone de l'articulation en pellicule (38), avec un prolongement (114) du ressort à lame (44) qui sollicite le palpeur (116).

**53.** Coffret selon l'une des revendications 48 à 50, caractérisé en ce que chaque tiroir (14) comporte un dispositif à fibre optique qui se termine sur l'organe d'affichage (57) et qui est éclairé au moyen d'une source lumineuse (190), tandis que l'organe d'affichage (57) comporte au moins une partie transparente.

**54.** Coffret selon la revendication 53, caractérisé en ce que la source lumineuse (190) est disposée sur le côté arrière du coffret, des câbles à fibres optiques (191) étant amenés en hélice dans le boîtier (10) à la hauteur des tiroirs individuels (14).

**55.** Coffret selon la revendication 54, caractérisé en ce que chaque tiroir (14) comporte un câble à fibre optique (194, 198) qui s'étend depuis une face arrière jusqu'à l'organe d'affichage (57), et qui débouche sur le côté arrière dans un sas de lumière (192, 197) au voisinage du câble à fibre optique correspondant (191).

**56.** Coffret selon la revendication 55, caractérisé en ce que le câble à fibres optiques (194) est disposé dans une rainure (139) et recouvert par un volet de recouvrement (195).

**57.** Coffret selon la revendication 55 ou 56, caractérisé en ce que le sas de lumière comprend un piquage (192) dans lequel débouche un câble à fibres optiques (191) devant l'extrémité avant du piquage (192), et une douille (197) qui peut être guidée au-delà de l'extrémité libre du piquage (192) et dans laquelle débouche l'autre câble à fibre optique (194).

**58.** Coffret selon l'une des revendications 1 à 57, caractérisé en ce que chaque tiroir (14) est limité dans son mouvement de coulissement de sortie par des butées (18) montées sur lui-même et des contre-butées (20) montées sur le boîtier (10).

**59.** Coffret selon la revendication 58, caractérisé en ce que chaque tiroir (14) comporte des appendices latéraux (18) qui pénètrent dans des fentes latérales (16) du boîtier (10) et dont l'extrémité sert de butée (20).

**60.** Coffret selon la revendication 59, caractérisé en ce que les appendices (18) des tiroirs (14) sont formés d'un seul tenant sur ces derniers en étant inclinés vers l'intérieur.

**61.** Coffret selon l'une des revendications 1 à 60, caractérisé en ce que chaque tiroir (14) comporte des éléments de guidage latéraux (68) auxquels sont associés des éléments de guidage complémentaires sur les côtés intérieurs de parois latérales de boîtier.

**62.** Coffret selon la revendication 61, caractérisé en ce que chaque tiroir comporte des encoches latérales (68) dans lesquelles pénètrent des entretoises (62) situées sur le côté du boîtier.

**63.** Coffret selon l'une des revendications 1, 7, 11 ou 14, caractérisé en ce que le ressort éjecteur comprend un ressort à branches en forme de cols (28) dont la partie courbe (102) et une branche (104) sont reçues dans le tiroir (24), alors que l'extrémité libre de l'autre branche (106) pénètre dans une encoche associée (94), située dans le plan principal du tiroir et ménagée dans une paroi arrière (66) de boîtier,

64. Coffret selon l'une des revendications 1 à 63, caractérisé par un dispositif de verrouillage comportant une touche (52), prévue sur le tiroir (14), accessible lorsque le tiroir (14) est rentré, au moyen de laquelle un crochet (82, 90, 02) peut être décliqueté hors d'un loquet (84).

65. Coffret selon la revendication 64, caractérisé en ce que la touche (52) fait saillie par son extrémité libre devant le plan frontal de coffret.

66. Coffret selon la revendication 64 ou 65, caractérisé en ce que la touche (52) est formée d'un seul tenant sur le tiroir (14).

67. Coffret selon la revendication 64 ou 65, caractérisé en ce que la touche (52) est montée dans la plaque frontale (40) pour l'actionnement du crochet (82) en pouvant être poussée vers la plaque frontale.

68. Coffret selon la revendication 64, caractérisé en ce que la plaque frontale (42), qui constitue la touche, peut pivoter autour d'une articulation en pellicule (38) en opposition à la force du ressort éjecteur (28) lorsque le crochet (92) est décliqueté.

69. Coffret selon l'une des revendications 64 à 67, caractérisé en ce que le loquet (84) est réalisé dans une paroi latérale de boîtier et que la touche (52) ou le crochet qui lui est associé est mobile dans le plan défini par le tiroir (14).

70. Coffret selon l'une des revendications 1 à 67, caractérisé en ce qu'un dispositif de verrouillage comprend un coulisseau de verrouillage (74) qui est mobile transversalement par rapport à la direction de déplacement du tiroir (14) et peut être décliqueté, au moyen d'une touche (52) prévue dans la plaque frontale (42), hors d'un loquet (84) qui est réalisé dans le boîtier (10).

71. Coffret selon la revendication 70, caractérisé en ce que le coulisseau de verrouillage (74) est guidé dans la plaque frontale (42) qui est creuse.

72. Coffret selon la revendication 70 ou 71, caractérisé en ce que le coulisseau de verrouillage (74) ou la touche (52) est sollicité de manière élastique dans la position de verrouillage.

73. Coffret selon la revendication 72, caractérisé en ce qu'un ressort de sollicitation (201) est prévu aussi bien pour le dispositif de verrouillage que pour le dispositif d'affichage.

74. Coffret selon l'une des revendications 64 à 73, caractérisé en ce que les touches (52) de tiroirs voisins (14) sont disposées dans un boîtier commun (10) en étant décalées les unes par rapport aux autres dans la zone de la plaque frontale (42).

75. Coffret selon la revendication 74, caractérisé en ce que les touches (52) des tiroirs (14) sont disposées en alternance près des extrémités des plaques frontales (42).

76. Coffret selon l'une des revendications 1 à 75, caractérisé en ce que le boîtier (10) est divisé par des étages intermédiaires (12) en compartiments réservés chacun à un tiroir (14) et en ce que la plaque frontale (42) de chaque tiroir (14) recouvre, dans sa position rentrée, un étage intermédiaire (12).

77. Coffret selon la revendication 76, caractérisé en ce que les arêtes du côté frontal des étages intermédiaires (12) sont décalées en retrait par rapport aux parois latérales de boîtier.

78. Coffret selon l'une des revendications 1 à 77, caractérisé en ce que sont prévus des organes de frein (108) susceptibles d'être écartés de manière élastique et s'appuyant sur un support d'enregistrement introduit.

79. Coffret selon la revendication 78, caractérisé en ce que les organes de freinage (108, 110) sont formés d'un seul tenant sur le tiroir (24) réalisé par injection en matière plastique.

80. Coffret selon la revendication 78 ou 79 destiné à des disques compacts, caractérisé en ce que l'angle, défini par le centre du disque (30) et les points de contact des organes de freinage (108, 110) est inférieur à 160° et supérieure à 90°, et en ce que les organes de freinage saisissent les disques sur la moitié voisine de la plaque frontale.

81. Coffret selon la revendication 80, caractérisé en ce que l'angle est à peu près de 140°.

82. Coffret selon la revendication 11, caractérisé en ce qu'il est prévu, entre la plaque frontale (40) qui est sollicitée par un agencement élastique (14) vers l'emplacement stable de prélèvement et le tiroir (24), un dispositif de verrouillage qui s'encliquette lors du pivotement de la plaque frontale (40) dans l'emplacement stable aligné avec le tiroir (24) et peut être décliqueté lors de la rentrée du tiroir (14) à l'intérieur du boîtier (10).

83. Coffret selon la revendication 1 ou 7, caractérisé en ce que la plaque frontale (40) est articulée sur le tiroir (24) à l'aide de tourillons élastiques (168) et comporte deux surfaces frontales voisines (164, 166), disposées en formant un angle entre elles, tournées vers le tiroir (24), chacune d'elles étant respectivement en contact avec une surface avant (160) du tiroir (24) dans l'un des deux emplacements stables.

84. Coffret selon la revendication 1 ou 7, caractérisé en ce qu'il est prévu sur chacun des deux côtés du tiroir (24) un ergot (220), transversal à la direction de sortie du tiroir, dont l'extrémité libre est disposée en pouvant s'écarter de manière élastique et est en contact avec un appendice (221) de la plaque frontale (40) et comporte à cet effet deux surfaces d'appui voisines formant un angle entre elles.

85. Coffret selon la revendication 1, caractérisé en ce qu'il est prévu un verrou (224), qui peut être verrouillé par une de ses extrémités dans le tiroir (24) dans deux positions différentes, est mobile de façon correspondante dans un ensemble de façade (40) et est sollicité de manière élastique, et peut, lors du coulissement de rentrée du tiroir (14) dans le boîtier (10), être amené dans la position de verrouillage dans laquelle le tiroir (24) et l'élément de façade (40) sont verrouillés en alignement.

86. Coffret selon la revendication 85, caractérisé en ce que le verrou (224) peut coulisser longitudinalement dans la direction de sortie et est monté à rotation autour d'un axe perpendiculairement à cette direction.

87. Coffret selon la revendication 86, caractérisé en ce que le verrou (224) comporte une saillie (234), qui est montée en pouvant courir sur une rampe (235) du boîtier.

88. Coffret selon l'une des revendications 85 à 87, caractérisé en ce que le tiroir (24) comprend deux évidements de verrouillage (225, 227), situés à des hauteurs différentes, disposés côte-à-côte et reliés entre eux.

89. Coffret selon la revendication 88, caractérisé en ce que l'extrémité libre du verrou (224) forme une rampe sur le côté haut dans la zone du tiroir (24), les évidements de verrouillage (225, 227) présentant des surfaces correspondantes (231, 233).

90. Coffret selon l'une des revendications 1 à 89, caractérisé en ce que la plaque frontale (40) comporte un revêtement frontal enfichable (202), qui recouvre sur l'extérieur des dispositifs de la plaque frontale (40).

91. Coffret selon la revendication 50 caractérisé en ce que le levier (199) est loge au moyen de son axe de rotation (218), dans un palier (200) à parois de palier ouvertes et y est sollicité de manière élastique tandis qu'il est prévu, pour l'organe d'affichage (57), une butée (217) accessible par actionnement du palpeur (58) qui est déjà atteinte après un écart partiel du levier (199).

92. Coffret selon l'une des revendications 1 à 91, caractérisé en ce que le tiroir (24) et la plaque frontale (40) associée, prévus pour les éléments d'insertion, sont en symétrie de miroir par rapport au plan vertical médian dans la direction de sortie du tiroir, de sorte que les éléments à monter peuvent être utilisés en symétrie de miroir.

93. Coffret selon la revendication 92, caractérisé en ce qu'un dispositif de verrouillage d'un dispositif affichage, un dispositif de maintien de la plaque frontale (40) dans deux emplacements stables ainsi qu'une touche de déverrouillage sont utilisables en symétrie de miroir.

94. Coffret selon l'une des revendications précédentes, caractérisé en ce qu'est logé dans la plaque frontale (40 à la Fig. 26) un organe palpeur, sollicité de manière élastique (116 à la Fig. 26), au moyen duquel la présence ou l'absence d'un support d'enregistrement (30 à la Fig. 26) peut être déterminé lorsque le tiroir est rentré, et qui est en liaison de coopération avec un organe d'affichage (124 à la Fig. 26) qui permet de déterminer optiquement la position respective prise par l'organe palpeur.

**Fig. 1**

**Fig. 2**

**Fig. 3**

EP 0 205 618 B1

Fig. 4

Fig. 5

Fig. 6

EP 0 205 618 B1

**Fig. 7**

**Fig. 8**

## Fig. 9

## Fig. 10

## Fig. 11

**Fig. 13**

**Fig. 12**

**Fig. 14**

**Fig. 15**

**Fig. 16**

*Fig: 18*

*Fig: 19*

*Fig: 17*

EP 0 205 618 B1

Fig. 20

Fig. 21

EP 0 205 618 B1

Fig. 25

Fig. 23

Fig. 22

Fig. 24

## _Fig. 26_

## _Fig. 27_

*Fig. 28*

EP 0 205 618 B1

_Fig: 30_

_Fig: 31_

_Fig: 29_

EP 0 205 618 B1

EP 0 205 618 B1

Fig. 32

41

**Fig. 33**

EP 0 205 618 B1

EP 0 205 618 B1

Fig. 34.

43

Fig. 35

Fig: 36

EP 0 205 618 B1

Fig. 38

Fig. 37

Fig. 39

Fig. 40

Fig. 41

Fig. 42

Fig. 43

Fig. 44

Fig. 45

14 219 222 214

47

24 220 221 215 38

40

40

**Fig. 46**

223 38

24 219 220 221 40

14

**Fig. 47**

44 214 14

24 38 215 40

44

40

**Fig. 48**

Fig. 49

Fig. 50

Fig. 51

Fig. 52